(19) Europäisches Patentamt / European Patent Office / Office européen des brevets

(11) **EP 3 390 481 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(21) Anmeldenummer: **16819036.1**

(22) Anmeldetag: **14.12.2016**

(51) Int Cl.:
**C08G 18/48** (2006.01)        **C08G 18/63** (2006.01)
**C08G 18/73** (2006.01)        **C08G 18/76** (2006.01)
**C08F 283/00** (2006.01)       **C08G 18/08** (2006.01)

(86) Internationale Anmeldenummer:
**PCT/EP2016/080876**

(87) Internationale Veröffentlichungsnummer:
**WO 2017/102777 (22.06.2017 Gazette 2017/25)**

(54) **WÄSSRIGE POLYMERDISPERSION FÜR HAFTKLEBEMASSEN**

AQUEOUS POLYMER DISPERSION FOR ADHESIVE COMPOUNDS

DISPERSION POLYMÈRE AQUEUSE POUR MASSES AUTOADHÉSIVES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2015 US 201562267294 P**

(43) Veröffentlichungstag der Anmeldung:
**24.10.2018 Patentblatt 2018/43**

(73) Patentinhaber: **BASF SE**
**67056 Ludwigshafen am Rhein (DE)**

(72) Erfinder:
• **TONHAUSER, Christine**
  **67056 Ludwigshafen (DE)**
• **ROSCHMANN, Konrad**
  **67056 Ludwigshafen (DE)**
• **WULFF, Dirk**
  **67056 Ludwigshafen (DE)**

• **SANDERS, Gemma**
  **67056 Ludwigshafen (DE)**
• **SIMANCAS, Kimberly**
  **67056 Ludwigshafen (DE)**
• **GEORGIEVA, Kristina**
  **68163 Mannheim (DE)**
• **LICHT, Ulrike**
  **67056 Ludwigshafen (DE)**
• **HARRER, Heinrich**
  **67056 Ludwigshafen (DE)**

(74) Vertreter: **BASF IP Association**
**BASF SE**
**G-FLP-C6**
**67056 Ludwigshafen (DE)**

(56) Entgegenhaltungen:
**EP-A2- 1 394 317     US-A- 3 705 164**

**Beschreibung**

Die vorliegende Erfindung betrifft die Verwendung von wässrige Polymerdispersionen zur Herstellung von Klebstoffen, insbesondere für Haftklebemassen.

Hintergrund der Erfindung

Zu den erfolgreichsten Klebstoffrohstoffen, welche auf organischen Lösemitteln basierende Klebstoffe immer weiter verdrängen, zählen wässrige Polymerdispersionen. Im Unterschied zu Lösungsmittel-basierten Klebstoffen erlauben wässrige Polymerdispersionen die Bereitstellung von Klebstoffzusammensetzungen, die nur einen geringen oder gar keinen Anteil an organischen Lösemitteln aufweisen. Nützliche Klebrohstoffe in diesem Anwendungsbereich sind beispielsweise Klebstoffe auf Basis von Polyacrylaten und Urethan-Gruppen enthaltenden Polymeren, wobei unter Klebrohstoff im Sinne der vorliegenden Erfindung die wässrige Dispersion der Bindemittel zu verstehen ist.

Solche Klebrohstoffe enthalten als Bindemittel eine polymere Komponente, die nach der Trocknung im Wesentlichen für die mechanischen und chemischen Eigenschaften der Beschichtung verantwortlich ist. Solche Eigenschaften sind eine hohe Scherfestigkeit (Kohäsion), eine hohe Schälfestigkeit (Adhäsion), eine gute Wärmestandfestigkeit und eine gute Soforthaftung, aber auch Chemikalien- und Witterungsbeständigkeit.

Die WO 2008/049932 beschreibt strahlungshärtbare Mischungen, welche niedermolekulare ethylenisch ungesättigten nicht-aromatischen Verbindungen enthalten sowie deren Verwendung als Haftklebstoff.

Die US 3705164 beschreibt wässrige Polymerdispersionen, welche erhältlich sind durch radikalische Polymerisation von Vinylmonomeren in Gegenwart von Wasser in dispergierten hochmolekularen anionischen Polyurethanen, und deren Verwendung als Beschichtungsmaterial.

Die EP 0841357 beschreibt Polyurethan-Hybrid-Dispersionen und deren Verwendung als Beschichtungsmittel und als Klebstoff, wobei die Dispersion erhältlich ist durch radikalische Emulsionspolymerisation von olefinisch ungesättigten Monomeren in Gegenwart mindestens eines Polyurethans in einem Gemisch von Wasser und mindestens einem wassermischbaren organischem Lösungsmittel.

Die US 4918129 beschreibt wässrige Polymerdispersionen, welche durch Polymerisation von olefinisch ungesättigten Monomeren in Gegenwart von Urethangruppen-aufweisenden Emulgatoren mit verzweigter Molekülstruktur erhalten werden, sowie die Verwendung dieser Dispersionen zur Herstellung von Beschichtungen.

Die WO 2012/084668 beschreibt Polyurethan-Polyacrylat-Hybrid Dispersionen, welche durch eine zweistufige radikalische Polymerisierung ethylenisch ungesättigter Verbindungen in Gegenwart mindestens eines Polyurethans erhältlich sind. Dabei wird in einer ersten Stufe mindestens eine ethylenisch ungesättigte Verbindung, welche eine Glasübergangstemperatur von mindestens 50° C aufweist, in Gegenwart mindestens einen Polyurethans, welches ausschließlich aus aliphatischen und/oder cycloaliphatischen Isocyanaten als isocyanatgruppenhaltigen Aufbaukomponenten aufgebaut ist und einen Gehalt an zumindest teilweise neutralisierten Säuregruppen unter 500 mmol pro kg Polyurethan aufweist, mindestens eines Redoxinitiatorsystems und mindestens einer Eisenverbindung zumindest teilweise radikalisch polymerisiert. Anschließend wird in einer zweiten Stufe mindestens eine ethylenisch ungesättigte Verbindung radikalisch polymerisiert, welche eine Glasübergangstemperatur von bis zu 20° C aufweist. Dabei beträgt das Gewichtsverhältnis von Polyurethan zu der Summe der ethylenisch ungesättigten Verbindungen der ersten und zweiten Stufen von 50 : 50 bis 10 : 90 und die Temperatur beträgt während der radikalischen Polymerisierung nicht mehr als 85° C.

Die aus dem Stand der Technik bekannten dispersionsbasierten Haftklebstoffe haben einige gravierende Nachteile. Beispielsweise sind eine hohe Scherfestigkeit (Kohäsion) und Wärmestandfestigkeit bei gleichzeitiger guter Schälkraft (Adhäsion) nicht gegeben.

Zusammenfassung der Erfindung

Aufgabe der vorliegenden Erfindung ist es daher, neue wässrige Polymerdispersionen zur Verfügung zu stellen, welche Klebstoffe mit verbesserten Eigenschaften ergeben, und insbesondere Scherfestigkeit (Kohäsion), Wärmestandfestigkeit und Schälkraft (Adhäsion) verbessern. Insbesondere sollten die wässrigen Polymerdispersionen eine optimale Adhäsions-Kohäsions-Balance aufweisen. Weitere vorteilhafte Eigenschaften sind eine gute Wasser-, Chemikalien- und Wetterbeständigkeit sowie eine gute Beschichtbarkeit (gleichmäßiges Beschichtungsbild) und eine schnelle Trocknung.

Diese und weitere Aufgaben werden durch die im Folgenden beschriebene Verwendung von wässrigen Polymerdispersionen für die Herstellung von Klestoffen gelöst. Diese wässrigen Polymerdispersionen sind erhältlich durch ein Verfahren, umfassend

A) Bereitstellung einer wässrigen Dispersion wenigstens eines im Wesentlichen unvernetzten Polyurethans PU in Form von dispergierten Polyurethanpartikeln,

wobei das Polyurethan PU erhältlich ist durch eine Polymerisation von Polyurethan-bildenden Verbindungen PU-M, enthaltend wenigstens ein Diol PU-M2, welches wenigstens eine Poly-$C_2$-$C_{14}$-alkylenethergruppe aufweist, welche wenigstens eine Wiederholungseinheit der Formel (i) aufweist

$$-O-CHR^a-CH_2-R^b-\qquad\text{(i)},$$

wobei

$R^a$ für Wasserstoff oder $C_1$-$C_{12}$-Alkyl steht,
$R^b$ für eine Bindung oder $C_1$-$C_3$-Alkenyl steht,
wobei $R^a$ nicht für Wasserstoff steht wenn $R^b$ eine Bindung ist, und wobei das PU im Wesentlichen keine ethylenisch ungesättigten Doppelbindungen aufweist und einen Gelanteil von < 20 % aufweist;

B) radikalische Polymerisation einer Monomerzusammensetzung PA-M aus radikalisch polymerisierbaren, ethylenisch ungesättigten Verbindungen. umfassend als Hauptbestandteil wenigstens eine monomere ethylenisch ungesättige Verbindung, die eine Wasserlöslichkeit von < 60 g/l bei 20° C und 1 bar aufweist, wobei die Monomerzusammensetzung eine theoretische Glasübergangstemperatur nach Fox von maximal 50° C aufweist, in der wässrigen Dispersion des wenigstens einen Polyurethans PU, wobei die Hauptmenge der Monomerzusammensetzung PA-M im Verlauf der Polymerisation zu der wässrigen Polymerdispersionen des wenigstens einen Polyurethans PU zugegeben wird.

Dementsprechend betrifft die vorliegende Erfindung die Verwendung derartiger wässriger Polymerdispersionen zur Herstellung von Klebstoffen, vorzugsweise als Haftklebstoff zur Herstellung von Klebeetiketten, Klebebändern, Pflastern, Bandagen und selbstklebenden Folien.

Ein weiterer Gegenstand der Erfindung sind Haftklebstoffartikel, wobei mindestens ein Teil einer Substratoberfläche mit mindestens einer der hierin beschriebenen wässrigen Polymerdispersion beschichtet ist.

Die erfindungsgemäß verwendeten wässrigen Polymerdispersionen zeigen überraschenderweise hervorragende Eigenschaften hinsichtlich der Scherfestigkeit, der Wärmestandfestigkeit und der Schälkraft. Darüber hinaus eignet sich das Herstellverfahren für eine besonders wirtschaftliche Herstellung der Dispersionen.

Ausführliche Beschreibung der Erfindung

Im Rahmen der Erfindung gibt das Präfix $C_n$-$C_m$ die Anzahl der Kohlenstoffatome an, die ein damit bezeichnetes Molekül oder ein damit bezeichneter Rest aufweisen kann. Die Anzahl der Kohlenstoffatome in $C_n$-$C_m$ liegt somit im Bereich von n bis m.

Im Rahmen der Erfindung beschreibt der Begriff "$C_1$-$C_{12}$-Alkyl" unverzweigte und verzweigte gesättigte Kohlenwasserstoffe mit 1 bis 12 Kohlenstoffatomen wie beispielsweise Methyl, Ethyl, n-Propyl, iso-Propyl, n-Butyl, iso-Butyl, tert-Butyl, n-Pentyl, iso-Pentyl, neo-Pentyl, n-Hexyl, n-Heptyl, n-Octyl, n-Nonyl, n-Decyl, n-Undecyl, n-Dodecyl und die Strukturisomere davon.

Im Rahmen der Erfindung beschreibt der Begriff "$C_1$-$C_3$-Alkylen" unverzweigte und verzweigte gesättigte Kohlenwasserstoffe mit 1 bis 3 Kohlenstoffatomen wie beispielsweise Methylen, Ethylen, n-Propylen, iso-Propylen. Bevorzugte $C_1$-$C_3$-Alkylen sind Methylen, Ethylen, n-Propylen.

Im Rahmen der Erfindung beschreibt der Begriff "$C_1$-$C_{20}$-Alkylestern" Ester von unverzweigten und verzweigten gesättigte Kohlenwasserstoffen mit 1 bis 20 Kohlenstoffatomen, beispielsweise Methyl-, Ethyl-, n-Propyl-, iso-Propyl, n-Butyl-, iso-Butyl-, tert-Butyl-, n-Pentyl-, iso-Pentyl-, neo-Pentyl-, n-Hexyl-, n-Heptyl-, n-Octyl-, n-Nonyl-, n-Decyl-, n-Undecyl-, n-Lauryl-, n-Myristyl-, n-Cetyl-, n-Stearyl-, n-Arachinyl-ester und die Strukturisomere davon.

Im Rahmen der Erfindung bezeichnet der Begriff "gesättigte aliphatische Diisocyanate"
gesättigte acyclische und cyclische Kohlenwasserstoff-Verbindungen, welche zwei Isocyanatgruppen tragen. Insbesondere bezeichnet dieser Begriff acyclische gesättigte aliphatische Diisocyanate. Im Rahmen der Erfindung bezeichnet der Begriff "gesättigte alicyclische Diisocyanate" gesättigte Kohlenwasserstoff-Verbindungen mit wenigstens einer, z. B. 1 oder 2, carbocyclischen Struktureinheiten, z. B. mit 1 oder 2 Cyclohexan-Einheiten, welche zwei Isocyanatgruppen aufweisen. Entsprechendes gilt für Diole und entsprechende Verbindungen.

Im Rahmen der Erfindung beschreibt der Begriff "polare Gruppen" Verbindungen oder Gruppen, welche ionische, ionisierbar oder polare sind.

Beispiele für polare Verbindungen sind Carbonsäuren, Sulfonsäuren, Sulfonsäureester, Phosphorsäuren, Phosphorsäureester sowie den Salzen davon. Beispiele für polare Gruppen sind insbesondere anionische Gruppen wie Carboxylat, Sulfonat, Sulfat, Phosphonat, Phosphat und die entsprechenden sauren Gruppen. Zu den polaren Gruppen

zählen auch $C_1$-$C_4$-Alkoxypolyeethylenoxy-Gruppen.

Im Rahmen der Erfindung beschreibt der Begriff "gegenüber Isocyanat reaktive Gruppe" eine Gruppe, welche mit Isocyanatgruppen unter Ausbildung einer kovalenten Bindung reagiert. Beispiele hierfür sind Hydroxy, Thiol, primäres Amin und sekundäres Amin.

(Meth)acryl und ebenso die Bezeichnungen (Meth)acrylsäure und (Meth)acrylat umfassen sowohl Acryl, Acrylsäure und Acrylat wie auch Methacryl, Methacrylsäure und Methacrylat.

Üblicherweise können die physikalischen Eigenschaften wie folgt bestimmt werden:

- Partikelgröße der Dispersion mittels dynamischer Lichtstreuung (DLS) oder mittels hydrodynamischem Radius (HDC).
- Molmasse der Polymere, insbesondere die zahlenmittlere Molmasse Mn und die gewichtsmittlere Molmasse Mw, mittels Gelpermeations-Chromatografie (GPC) oder mittels Massenspektrometrie.
  Sofern nichts anderes genannt ist, bezeichnet die für Polymere angegebenen Molmasse jeweils die gewichtsmittlere Molmasse.
- Glasübergangstemperatur (Tg) mittels dynamischer Differenzkalorimetrie (DSC), bevorzugt nach der ASTM-Vorschrift D3418-03 mit einer Aufheizrate von 10° C/min.
  Eine Berechnung der Glasübergangstemperatur zudem nach bekannten Methoden auf Basis tabellierter Werte für bestimmte Monomere, wie beispielsweise nach Fox, fuhrt nicht notwendigerweise zu unterschiedlichen Glasübergangstemperaturen der Bereiche, beispielsweise wenn Vernetzer als Monomere eingesetzt werden, deren Einfluss auf die Glasübergangstemperatur rechnerisch nicht erfasst werden kann. Für Monomerengemische ohne Vernetzer kann die Berechnung der Glasübergangstemperatur nach Fox jedoch gute Näherungswerte liefern.
- Schmelztemperatur (Tm) mittels dynamischer Differenzkalorimetrie (DSC).
- Der Gelanteil kann beispielsweise mittels Feldflussfraktionierung (FFF), wie hierin definiert, bestimmt werden. Ebenso kann der Gelanteil mittels analytischer Ultrazentrifuge (AUZ) wie von W. Mächtle, G. Ley und J. Streib in Prog. Coll. Pol. Sci. 2007, 99, 144-153 beschrieben mit THF als Lösemittel bestimmt werden.

Sofern nicht anders angegeben, beziehen sich Normen und Angaben zu (Mess-)Verfahren auf die entsprechenden ASTM- und IUPAC-Publikationen zum Tag der Patentanmeldung.

Die erfindungsgemäßen wässrigen Polymerdispersionen sind erhältlich durch ein Verfahren, umfassend

A) Bereitstellung einer wässrigen Polymerdispersion wenigstens eines Polyurethans PU in Form von dispergierten Polyurethanpartikeln;
B) radikalische Polymerisation einer Monomerzusammensetzung PA-M in der wässrigen Polymerdispersion des wenigstens einen Polyurethans PU.

Das Polyurethan PU weist im Wesentlichen keine ethylenisch ungesättigte Bindung auf. "Im Wesentlichen keine" bedeutet, dass das PU weniger als 0,1 mol/kg, bevorzugt weniger als 0,01 mol/kg ethylenisch ungesättigte Bindungen aufweist. Besonders bevorzugt weist das PU gar keine ethylenisch ungesättigten Bindungen auf.

Das Polyurethan PU weist einen Gelanteil von < 20 %, bevorzugt von < 10 %, gemessen mit der hierin definierten Methode der Feldflussfraktionierung (FFF) auf. Besonders bevorzugt weist das PU gar keinen Gelanteil auf. Alternativ zur Feldflussfraktionierung (FFF) kann der Gelgehalt auch mittels analytischer Ultrazentrifuge (AUZ) wie von W. Mächtle, G. Ley und J. Streib in Prog. Coll. Pol. Sci. 2007, 99, 144-153 beschrieben mit THF als Lösemittel bestimmt werden.

Feldflussfraktionierung (FFF)

Für Proben, deren Molmasse $M_w$ aufgrund signifikanter Gel-Anteile (= trübe THF-Lösung) nicht mittels GPC ermittelt werden kann, erfolgt die Bestimmung des Gelgehalts sowie der mittleren Molmasse $M_w$ mittels Feldflussfraktionierung FFF. Zur Bestimmung der Feldflussfraktionierung FFF wird die kolloidale Probe (7 g/l in THF) durch den Querfluss in einem schmalen Fraktionierungskanal nach dem hydrodynamischen Radius aufgetrennt, wobei als Elutionsmittel üblicherweise THF verwendet wird. Der Radius aller Fraktionen wird aus der Winkelverteilung des Vielwinkel-Lichtstreudetektors abgelesen, die Molmasse jeder Fraktion resultieren aus dem Vergleich von Brechungsindex-Detektor und Lichtstreudetektor, wobei für die Auswertung die Funktion dn/dc = 0,08 $cm^3$/g benutzt wird. Für die Bestimmung der Sol-Anteile wird über 0,2 $\mu$m, für die der Gel-Anteile über 5,0 $\mu$m vorfiltriert. Fehlende Anteile, d.h. im Falle einer Wiederfindungsrate < 100 % könnten entweder im Vorfilter zurückgehalten worden (= Gel-Körper > 5 $\mu$m) oder durch die Trennmembran entwichen sein (= niedermolekulare Bestandteile mit $M_w$ <5 kDa). Die erhaltenen Messwerte für %Sol bzw. %Gel werden gemäß ihres Verhaltens bei der Probenpräparation entsprechend korrigiert und summieren sich auf 100 %. Die mittlere Molmasse $\dot{M}_w$ berechnet sich aus der Formel $\dot{M}_w$ = %Sol x $M_w$(sol) + %Gel x $M_w$(gel). Es werden folgende Einstellungen verwendet: Sol-Anteile: Durchfluss: 0,7 mL/min; Querfluss: 3,0 konst. 5 min auf 0,1 mL/min in 20 min; Focus: 133. Gel-Anteile: Durchfluss: 0,7 mL/min; Querfluss: 3,0 konst. 3 min auf 0,1 mL/min in 15 min; Focus: 133.

Vorzugsweise ist das Polyurethan PU im Wesentlichen unvernetzt. "Im Wesentlichen unvernetzt" bedeutet, dass das PU einen Vernetzungsgrad von weniger als 5 %, bevorzugt weniger als 2 % und besonders bevorzugt weniger als 1 % aufweist.

Der Vernetzungsgrad errechnet sich als Quotient aus der Molzahl vernetzter bzw. vernetzender Grundbausteine und der Molzahl der insgesamt vorhandenen Grundbausteine.

Erfindungsgemäß ist das Polyurethan PU erhältlich durch eine Polymerisation von Polyurethan-bildenden Verbindungen PU-M, enthaltend wenigstens ein Diol PU-M2, welches wenigstens eine Poly-$C_2$-$C_{14}$-alkylenethergruppe aufweist, welche wenigstens eine Wiederholungseinheit der Formel (i) aufweist

$$-O-CHR^a-CH_2-R^b- \qquad \text{(i)}$$

wobei

$R^a$ für Wasserstoff oder $C_1$-$C_{12}$-Alkyl, bevorzugt für $C_1$-$C_{12}$-Alkyl, besonders bevorzugt für $C_1$-$C_4$-Alkyl, ganz besonders bevorzugt für Methyl oder Ethyl steht,

$R^b$ für eine Bindung oder $C_1$-$C_3$-Alkylen steht,

wobei $R^a$ nicht für Wasserstoff steht wenn $R^b$ eine Bindung ist.

In den jeweiligen Wiederholungseinheiten -O-CHR^a-CH_2-R^b- der Formel (i), können die Reste $R^a$ und $R^b$ unabhängig voneinander gleich oder verschieden sein, wobei jeweils $R^a$ nicht für Wasserstoff steht wenn $R^b$ eine Bindung ist.

Das Polyurethan PU ist durch ein Polymerisation von Polyurethan-bildenden Verbindungen erhältlich, wobei wenigstens ein Diol PU-M2 eingesetzt wird, welches wenigstens eine Poly-$C_2$-$C_{14}$-alkylenethergruppe aufweist, welche Wiederholungseinheiten der Formel (i) aufweist.

Das Diol PU-M2 kann zusätzlich zu der wenigstens einen Poly-$C_2$-$C_{14}$-alkylen-ethergruppe weitere Gruppen aufweisen, beispielsweise Alkyl-, Alkylen-, Carbonat-, Ester- und Ether-Gruppen.

Bevorzugt weist das Diol PU-M2 wenigstens 80 Gew.-%, besonders bevorzugt wenigstens 90 Gew.-% und ganz besonders bevorzugt wenigstens 95 Gew.-%, bezogen auf das Gesamtgewicht des Diols, Poly-$C_2$-$C_{14}$-alkylenethergruppe auf.

Bevorzugt sind in dem Diol PU-M2 wenigstens 50 %, besonders bevorzugt wenigstens 70 % und ganz besonders bevorzugt wenigstens 90 % der Wiederholungseinheiten der Poly-$C_2$-$C_{14}$-alkylenethergruppen solche der Formel (i).

Beispielsweise weist das PU Einheiten auf, die ausgewählt sind unter Polyetherdiolen, beispielsweise Polypropylenglykol, Polyethylenglycol-Polypropylenglycol-Co- und -Ter-Polymere, Polybutylenglykol oder Polytetrahydrofuran und deren Copolymeren. Die Funktionalität der Polyetherdiole liegt vorzugsweise im Bereich von 1,5 bis 2,5 und besonders bevorzugt im Bereich von 1,8 bis 2,2. Insbesondere beträgt die Funktionalität 2.

Bevorzugt weist das Diol PU-M2 eine Molmasse im Bereich von 1000 bis 10000 g/mol, besonders bevorzugt im Bereich von 1500 bis 5000 g/mol auf.

Im Übrigen können alle üblichen Polyurethan-bildenden Monomere eingesetzt werden.

Als Isocyanatkomponete die üblicherweise in der Polyurethanchemie eingesetzten Di- und Polyisocyanate in Betracht, beispielsweise kommerziell erhältliche Di- und Poly-Isocyanate mit 4 bis 30 C-Atomen wie beispielsweise kommerziell erhältliche aliphatische, cycloaliphatische und aromatische Diisocyanat- und Polyisocyanat-Verbindungen.

Beispiele für übliche Diisocyanate sind aliphatische Diisocyanate wie Tetramethylendiisocyanat, Pentamethylendiisocyanat, Hexamethylendiisocyanat (1,6-Diisocyanatohexan, HDI), Octamethylendiisocyanat, Decamethylendiisocyanat, Dodecamethylendiisocyanat, Tetradecamethylendiisocyanat, Ester des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, trans/trans-, cis/cis- und cis/trans-Isomere des 4,4'- oder 2,4'-Di(isocyanatocyclohexyl)methan ($H_{12}$MDI), 1-Isocyanato-3,3,5-trimethyl-5-(isocyanatomethyl)cyclohexan (Isophorondiisocyanat, IPDI), 2,2-Bis-(4-isocyanatocyclohexyl)-propan, 1,3- oder 1,4-Bis(isocyanatomethyl)cyclohexan oder 2,4- oder 2,6-Diisocyanato-1-methylcyclohexan oder aromatische Diisocyanate wie Toluendiisocyanat (TDI), Methylendiphenylisocyanat (MDI) oder Tetramethylxylylendiisocyanat (TMXDI) sowie NCO-terminierte Polycarbodiimide, beispielsweise NCO-terminierte Polycarbodiimide auf Basis TMXDI.

Als Polyisocyanate kommen auch Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten $C_4$-$C_{20}$-Alkylendiisocyanateond er cycloaliphatischen Diisocyanaten mit insgesamt 6 bis 20 C-Atomen oder deren Gemische in Betracht. Bevorzugt sind

- Isocyanuratgruppen aufweisende Polyisocyanate von aliphatischen und/oder cycloaliphatischen Diisocyanaten, insbesondere die entsprechenden aliphatischen und/oder cycloaliphatischen Isocyanato-Isocyanurate, beispielsweise auf Basis von Hexamethylendiisocyanat und Isophorondiisocyanat;
- Uretdiondiisocyanate mit aliphatisch und/oder cycloaliphatisch gebundenen Isocyanatgruppen, vorzugsweise aliphatisch und/oder cycloaliphatisch gebundenen und insbesondere auf Basis von Hexamethylendiisocyanat oder Isophorondiisocyanat;
- Biuretgruppen aufweisende Polyisocyanate mit cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen.
- Urethan- und/oder Allophanatgruppen aufweisende Polyisocyanate mit aliphatisch oder cycloaliphatisch gebundenen, bevorzugt aliphatisch oder cycloaliphatisch gebundenen Isocyanatgruppen, wie sie beispielsweise durch Umsetzung von überschussigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können.
- Oxadiazintriongruppen enthaltende Polyisocyanate, vorzugsweise von Hexamethylendiisocyanat oder Isophorondiisocyanat abgeleitet;
- Uretonimin-modifizierte Polyisocyanate.

Bevorzugte Di- und Polyisocyanate sind ausgewählt unter Diisocyanaten, beispielsweise aromatische und aliphatische Diisocyanatverbindungen mit 4 bis 70 C-Atomen, vorzugsweise

- aromatischen Diisocyanaten, beispielsweise Methylendi(phenylisocyanat) (MDI), Toluol-2,4-diisocyanat, Tetramethylxylylendiisocyanat;
- aliphatischen acyclischen gesättigten und ungesättigten Diisocyanaten, beispielsweise Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Ester des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, trans/trans-, cis/cis- und cis/trans-Isomere des 4,4'- oder 2,4'-Di(isocyanatocyclohexyl)methan, 1-Isocyanato-3,3,5-trimethyl-5-(isocyanatomethyl)cyclohexan (Isophorondiisocyanat), 2,2-Bis-(4-isocyanatocyclohexyl)-propan, 1,3- und 1,4-Bis(isocyanatomethyl)cyclohexan, 2,4- und 2,6-Diisocyanato-1-methylcyclohexan;
- aliphatischen cyclischen gesättigten und ungesättigten Diisocyanaten, beispielsweise, 1,4-, 1,3- oder 1,2-Diisocyanatocyclohexan, trans/trans-, cis/cis- und cis/trans-Isomere des 4,4'- oder 2,4'-Di(isocyanatocyclohexyl)methan, 1-Isocyanato-3,3,5-trimethyl-5-(isocyanatomethyl)cyclohexan (Isophorondiisocyanat), 2,2-Bis-(4-isocyanatocyclohexyl)-propan, 1,3- und 1,4-Bis(isocyanatomethyl)cyclohexan, 2,4- und 2,6-Diisocyanato-1-methylcyclohexan
- NCO-terminierte Polycarbodiimide, z.B. NCO-terminierte Polycarbodiimide auf Basis TMXDI, beispielsweise das TMXDI-Dimer, -Trimer oder -Tetramer;

sowie unter Verbindungen, welche mehr als 2 Isocyanatgruppen, beispielsweise 3, 4, 5 oder mehr Isocyanatgruppen, aufweisen, vorzugsweise aromatische, aliphatische und cycloaliphatische Polyisocyanatverbindungen mit 4 bis 70 C-Atomen.

Besonders bevorzugt sind Diisocyanate, welche vorzugsweise ausgewählt sind unter Toluol-2,4-diisocyanat (TDI), 1-Isocyanato-3,5,5-trimethyl-5-isocyanatomethylcyclohexan (IPDI), Tetramethylxylylendiisocyanat (TMXDI), Hexamethylendiisocyanat (HDI), Bis-(4-isocyanatocyclohexyl)methan (HMDI) und Mischungen davon.

Es können auch Gemische der genannten Diisocyanate eingesetzt werden.

Häufig ist das Polyurethan PU erhältlich durch eine Polymerisation von Polyurethan-bildenden Verbindungen PU-M, umfassend:

a) wenigstens einer Isocyanat-Komponente PU-M1, umfassend wenigstens eine Diisocyanat-Verbindung PU-M1a und

b) wenigstens einer Di- oder Polyolkomponente, umfassend wenigstens ein Diol PU-M2, wie hierin definiert.

Insbesondere ist das Polyurethan PU erhältlich durch eine Polymerisation von Polyurethan-bildenden Verbindungen PU-M, umfassend:

a) wenigstens einer Isocyanat-Komponente PU-M1, umfassend:

a1) wenigstens eine Diisocyanat-Verbindung PU-M1a und
a2) gegebenenfalls wenigstens eine von PU-M1a verschiedene Isocyanat-Verbindung PU-Mlb, die mehr als 2 Isocyanatgruppen pro Molekül aufweist,

b) wenigstens einer Di- oder Polyolkomponente, umfassend:

b1) wenigstens ein Diol PU-M2, welches wenigstens eine Poly-$C_2$-$C_{14}$-alkylenethergruppe aufweist, welche wenigstens eine Wiederholungseinheiten der Formel (i) aufweist

$$-O-CHR^a-CH_2-R^b- \qquad (i)$$

wobei

$R^a$ für Wasserstoff oder $C_1$-$C_{12}$-Alkyl, bevorzugt für Wasserstoff oder $C_1$-$C_4$-Alkyl, besonders bevorzugt für Methyl oder Ethyl, steht,

$R^b$ für eine Bindung oder $C_1$-$C_3$-Alkylen steht,

wobei $R^a$ nicht für Wasserstoff steht wenn $R^b$ eine Bindung ist,
b2) gegebenenfalls eine oder mehrere von PU-M2 verschiedene Diol- oder Polyol-komponenten PU-M3, welche ausgewählt sind unter

- aliphatischen gesättigten oligomeren und polymeren Diol- und Polyol-verbindungen PU-M3a und
- aliphatischen, cycloaliphatischen und aromatischen niedermolekularen Diolverbindungen PU-M3b mit einer Molmasse von weniger als 400 g/mol,

c) gegebenenfalls wenigstens eine Komponente PU-M4, welche wenigstens eine polare oder polarisierbare Gruppe und wenigstens eine gegenüber Isocyanat reaktive Gruppe aufweist,
d) gegebenenfalls einer oder mehreren, von den Komponenten a) bis c) verschiedener Komponente PU-M5.

Die Verbindung PU-M1a ist ausgewählt unter Verbindungen, welche 2 Isocyanatgruppen aufweisen, beispielsweise aromatische und aliphatische Diisocyanatverbindungen mit 4 bis 70 C-Atomen.

Bevorzugt ist die Verbindung PU-M1a ausgewählt unter

- aromatischen Diisocyanaten, beispielsweise Methylendi(phenylisocyanat) (MDI), Toluol-2,4-diisocyanat, Tetramethylxylylendiisocyanat;
- aliphatischen acyclischen gesättigten und ungesättigten Diisocyanaten, beispielsweise Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Ester des Lysindiisocyanates, Trimethylhexandiisocyanat oder Tetramethylhexandiisocyanat, cycloaliphatische Diisocyanate wie 1,4-, 1,3- oder 1,2-Diisocyanatocyclohexan, trans/trans-, cis/cis- und cis/trans-Isomere des 4,4'- oder 2,4'-Di(isocyanatocyclohexyl)methan, 1-Isocyanato-3,3,5-trimethyl-5-(isocyanatomethyl)cyclohexan (Isophorondiisocyanat), 2,2-Bis-(4-isocyanatocyclohexyl)-propan, 1,3- und 1,4-Bis(isocyanatomethyl)cyclohexan, 2,4- und 2,6-Diisocyanato-1-methylcyclohexan;
- aliphatischen cyclischen gesättigten und ungesättigten Diisocyanaten, beispielsweise, 1,4-, 1,3- oder 1,2-Diisocyanatocyclohexan, trans/trans-, cis/cis- und cis/trans-Isomere des 4,4'- oder 2,4'-Di(isocyanatocyclohexyl)methan, 1-Isocyanato-3,3,5-trimethyl-5-(isocyanatomethyl)cyclohexan (Isophorondiisocyanat), 2,2-Bis-(4-isocyanatocyclohexyl)-propan, 1,3- und 1,4-Bis(isocyanatomethyl)cyclohexan, 2,4- und 2,6-Diisocyanato-1-methylcyclohexan.

Besonders bevorzugt ist die Verbindung PU-M1a ausgewählt ist unter Toluol-2,4-diisocyanat (TDI), 1-Isocyanato-3,5,5-trimethyl-5-isocyanatomethylcyclohexan (Isophorondiisocyanat, IPDI), Tetramethylxylylendiisocyanat (TMXDI), Hexamethylendiisocyanat (HDI), Bis-(4-isocyanatocyclohexyl)methan (HMDI) und Mischungen davon.
Die Verbindung PU-M1b ist ausgewählt unter Verbindungen, welche mehr als 2 Isocyanatgruppen, beispielsweise 3, 4, 5 oder mehr Isocyanatgruppen, aufweisen, beispielsweise aromatische, aliphatische und cycloaliphatische Polyisocyanatverbindungen mit 4 bis 70 C-Atomen. Als Polyisocyanatverbindungen kommen beispielsweise Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten $C_4$-$C_{70}$-Alkylendiisocyanate oder cycloaliphatischen Di-isocyanaten mit insgesamt 6 bis 20
C-Atomen und deren Gemische in Betracht.
Bevorzugt ist die Verbindung PU-M1b ausgewählt unter aromatischen, aliphatischen und cycloaliphatischen Tri-, Tetra-, Penta-, oder Polyisocyanatverbindungen mit 4 bis 30 C-Atomen.

Bevorzugt enthält die Isocyanat-Komponente PU-M1, wenigstens 70 Gew.-%, besonders bevorzugt wenigstens 80 Gew.-% und insbesondere wenigstens 90 Gew.-%, bezogen auf die Gesamtmasse der Verbindungen PU-M1, an Verbindungen PU-M1a.

In einer Ausführungsform enthält die Isocyanat-Komponente PU-M1 ausschließlich Verbindungen PU-M1a.

Das Diol PU-M2 ist ausgewählt unter Diolen, welche wenigstens eine Poly-$C_2$-$C_{14}$-alkylenethergruppe aufweisen, welche wenigstens eine Wiederholungseinheit der Formel (i) aufweist

$$-O-CHR^a-CH_2-R^b- \qquad (i)$$

wobei

$R^a$ für Wasserstoff oder $C_1$-$C_{12}$-Alkyl, bevorzugt für $C_1$-$C_{12}$-Alkyl, besonders bevorzugt für $C_1$-$C_4$-Alkyl, ganz besonders bevorzugt für Methyl oder Ethyl steht,

$R^b$ für eine Bindung oder $C_1$-$C_3$-Alkylen steht,

wobei $R^a$ nicht für Wasserstoff steht wenn $R^b$ eine Bindung ist.

Mögliche Diole PU-M2 der Formel (i) sind beispielsweise Polypropylenoxid, Polybutylenoxid, Polytetrahydrofuran, und deren Copolymere sowie Copolymere, die Polypropylenoxid-, Polybutylenoxid- oder Polytetrahydrofuran-Wiederholungseinheiten enthalten.

Es ist für den Fachmann ersichtlich, dass die Diole PU-M2 reines Polyethylenglykol (d.h. $R^a$ = Wasserstoff und $R^b$ = eine Bindung) nicht umfassen.

Dabei können die Reste $R^a$ und $R^b$ unabhängig voneinander gleich oder verschieden sein.

Bevorzugt steht in dem Diol PU-M2 in den Wiederholungseinheiten der Formel (i) $R^a$ unabhängig voneinander für $C_1$-$C_{12}$-Alkyl, besonders bevorzugt für $C_1$-$C_4$-Alkyl, ganz besonders bevorzugt für Methyl oder Ethyl.

Bevorzugt steht in dem Diol PU-M2 in den Wiederholungseinheiten der Formel (i) $R^b$ unabhängig voneinander für eine Bindung oder für $C_1$-$C_3$-Alkylen.

In einer speziell bevorzugten Ausführungsform steht $R^a$ nicht für Wasserstoff.

Das Diol PU-M2 kann zusätzlich zu der wenigstens einen Poly-$C_2$-$C_{14}$-alkylen-ethergruppe weitere Gruppen aufweisen, beispielsweise Alkyl-, Alkylen-, Carbonat-, Ester- und Ether-Gruppen.

Beispielsweise weist das Diol PU-M2 wenigstens eine Einheit der Formel (ii)

$$-R^c-O-CHR^d-CH_2-R^e-R^f- \qquad (ii)$$

auf, wobei

$R^c$ für eine Bindung oder für -C(=O)-, oder -O-C(=O)- steht,

$R^d$ für Wasserstoff oder $C_1$-$C_{12}$-Alkyl, bevorzugt für $C_1$-$C_{12}$-alkyl, besonders bevorzugt für $C_1$-$C_4$-Alkyl, steht,

$R^e$ für eine Bindung oder für $C_1$-$C_{11}$ Alkylen, insbesondere für eine Bindung oder für $C_1$-$C_3$-Alkylen, steht,

$R^f$ für eine Bindung oder für -C(=O)-, -O-C(=O)- oder -C(=O)-O- steht,

mit der Maßgabe, dass nicht $R^c$ und $R^f$ beide für eine Bindung stehen.

Bevorzugt weist das Diol PU-M2 wenigstens 80 Gew.-%, besonders bevorzugt wenigstens 90 Gew.-% und ganz besonders bevorzugt wenigstens 95 Gew.-%, bezogen auf das Gesamtgewicht des Diols, Poly-$C_2$-$C_{14}$-alkylenethergruppen auf.

Bevorzugt sind in dem Diol PU-M2 wenigstens 50 %, besonders bevorzugt wenigstens 70 % und ganz besonders bevorzugt wenigstens 90 % der Poly-$C_2$-$C_{14}$-alkylenethergruppen solche der Formel (i).

Vorzugsweise ist das Diol PU-M2 ausgewählt unter Polyetherdiolen, beispielsweise solchen, die durch Polymerisation von Propylenoxid und/oder Butylenoxid, gegebenenfalls mit weiteren Monomeren wie beispielsweise Ethylenoxid, Tetrahydrofuran, oder Epichlorhydrin, zum Beispiel in Gegenwart von $BF_3$ oder durch Anlagerung dieser Verbindungen gegebenenfalls im Gemisch oder nacheinander, an Startkomponenten mit reaktionsfähigen Wasserstoffatomen, wie Alkohole oder Amine, Wasser, Ethylenglykol, Propan-1,2-diol, Propan-1,3-diol, 2,2-Bis(4-hydroxydiphenyl)-propan und Anilin erhältlich sind.

Bevorzugt sind Polypropylenglykol und Polyethylenglycol-Polypropylenglycol-Co- und -Ter-Polymere, Polybutylenglykol, Polytetrahydrofuran und deren Copolymere.

In einer bevorzugten Ausführungsform ist das Diol PU-M2 ausgewählt unter Polyetherdiolen der Formel (iii),

$$H-(O-CHR^a-CH_2-R^b)_n-OH \qquad (iii)$$

wobei

$R^a$ und $R^b$ wie hierin definiert sind und

n für eine natürliche Zahl im Bereich von 5 bis 500 steht, und bevorzugt im Bereich von 10 bis 300, besonders bevorzugt von 15 bis 200 steht.

Mögliche Diole PU-M2 der Formel (iii) sind dann beispielsweise Polypropylenoxid, Polypropylenoxid-co-Polyethylenoxid, Polybutylenoxid und Polytetrahydrofuran.

In einer Ausführungsform steht in den Diolen der Formel (iii) $R^a$ für $C_1$-$C_{12}$-Alkyl, bevorzugt für $C_1$-$C_4$-Alkyl, insbesondere für Methyl oder Ethyl. Vorzugsweise ist das Diol PU-M2 dann Polypropylenglykol oder Polybutylenglycol.

Bevorzugt weist das Diol PU-M2 eine Molmasse im Bereich von 1000 bis 10000 g/mol, besonders bevorzugt im Bereich von 1500 bis 5000 g/mol auf.

Die Komponente PU-M3 ist ausgewählt unter von den Verbindungen PU-M2 verschiedenen Diol- oder Polyol-Verbindungen. Diese sind ausgewählt unter PU-M3a und PU-M3b.

Die Verbindungen PU-M3a sind ausgewählt unter von den Verbindungen PU-M2 verschiedenen aliphatischen gesättigten oligomeren und polymeren Diol- und Polyol-verbindungen. Geeignete Verbindungen sind beispielsweise Polyetherdiole, z.B. Polyethylenoxid, Polyetherpolyole, beispielsweise verzweigte Polyethylenoxide, Polyesterdiole, Polyesterpolyole, Polycarbonatdiolen und Polycarbonatpolyole.

Die Verbindung PU-M3a ist bevorzugt ausgewählt unter von den Verbindungen PU-M2 verschiedenen Diolverbindungen und Polyolverbindungen, bevorzugt mit einer gewichtsmittleren Molmasse im Bereich von 100 bis 20000 g/mol, insbesondere im Bereich von 400 bis 15000 g/mol.

Bei den Polyetherdiolen und Polyetherpolyolen handelt es sich um übliche Komponenten. Sie sind insbesondere durch Polymerisation von Ethylenoxid, Styroloxid oder Epichlorhydrin mit sich selbst, z.B. in Gegenwart von $BF_3$ oder durch Anlagerung dieser Verbindungen, gegebenenfalls im Gemisch oder nacheinander, an Startkomponenten mit reaktionsfähigen Wasserstoffatomen, wie Alkoholen oder Aminen, beispielsweise Wasser, Ethylenglykol, Propan-1,2-diol, Propan-1,3-diol, 2,2-Bis(4-hydroxydiphenyl)-propan oder Anilin erhältlich. Besonders bevorzugt sind Polyethylenglykol und andere, von den Verbindungen M2 verschiedene Polyetherdiole oder Polyetherpolyole mit einem Molekulargewicht von 500 bis 5000 g/mol, und vor allem 1000 bis 4500 g/mol. Ganz besonders bevorzugt ist Polyethylenglykol.

Bei den Polyesterdiolen und Polyesterpolyolen handelt es sich um übliche Komponenten, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Oxalsäure, Malonsäure, Maleinsäure, Maleinsäureanhydrid, Fumarsäure, Bernsteinsäure, Glutarsäure, Glutarsäureanhydrid, Adipinsäure, Pimelinsäure, Korksäure, Azelainsäure, Sebacinsäure, Undecandicarbonsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, dimere Fettsäuren. Bevorzugt sind Dicarbonsäuren der allgemeinen Formel $HOOC$-$(CH_2)_y$-$COOH$, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel $HO$-$(CH_2)_x$-$OH$, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homooder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel $HO$-$(CH_2)_z$-$COOH$, wobei z eine Zahl von 1 bis 20, bevorzugt eine ungerade Zahl von 3 bis 19 ist, abgeleitet sind, z.B. ε-Caprolacton, β-Propiolacton, γ-Butyrolacton, Valerolacton und Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden. Daneben kommen als Monomere auch Polyetherdiole in Betracht. Sie sind insbesondere durch Polymerisation von Ethylenoxid, Propylenoxid, Butylenoxid, Tetrahydrofuran, Styroloxid oder Epichlorhydrin erhältlich.

Bevorzugt ist die Komponente PU-M3a ausgewählt unter aliphatischen Polyetherdiolen und -polyolen und aliphatischen Polyester diolen und-polyolen, insbesondere unter aliphatischen Polyetherdiolen ausgewählt unter Polyethylenoxid, Polytetrahydrofuran, und Copolymeren davon, und aliphatischen Polyester-diolen und -polyolen, die aus wenigstens einer $C_3$-$C_{12}$-Alkandicarbonsäure und wenigstens einem $C_3$-$C_{10}$-Alkandiol aufgebaut sind.

Die Verbindungen PU-M3b sind ausgewählt unter aliphatischen, cycloaliphatischen und aromatischen niedermolekularen Diolverbindungen PU-M3b mit einer Molmasse von weniger als 400 g/mol.

Vorzugsweise sind die Verbindungen PU-M3b ausgewählt unter

- aliphatischen unverzweigten und verzweigten Diolverbindungen mit 2 bis 20 C-Atomen, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- und 1,4-Butandiol, 1,6-Hexandiol, 1,10-Dekandiol, 2-Ethyl-1,3-Hexandiol, 2,4-Diethyloktan-1,3-diol, 1,1-, 1,2-, 1,3- und 1,4-Cyclohexandimethanol, 1,2-, 1,3- oder 1,4-Cyclohexandiol,
- cyclischen aliphatischen Diolverbindungen mit 3 bis 14 C-Atomen, beispielsweise Tetramethylcyclobutandiol, 1,2-, 1,3- und 1,4-Cyclohexandiol, Cyclooctandiol, Norbornandiol, Pinandiol, Decalindiol, 2,2-Bis(4-hydroxycyclohexyl)propan, Bis-(4-hydroxycyclohexan)isopropyliden,
- aromatischen Diolverbindungen mit 6 bis 14 C-Atomen, beispielsweise Hydrochinon, Bisphenol A, Bisphenol F, Bisphenol B, Bisphenol S.

Zudem kommen als Komponente A3b die im Zusammenhang mit der Polyesterkomponente genannten aliphatischen und cycloaliphatischen Diole in Betracht.

Bevorzugt sind unverzweigte Diole mit 2 bis 12 C-Atomen und einer gradzahligen Anzahl von C-Atomen sowie 1,4-Butandiol, 1,5-Pentandiol und Neopentylglykol.

Insbesondere bevorzugt ist 1,4-Butandiol, 1,5-Pentandiol und Neopentylglykol.

Die Verbindung PU-M4 ist ausgewählt unter Verbindungen, welche wenigstens eine polare Gruppe und wenigstens eine gegenüber Isocyanat reaktive Gruppe aufweisen.

Solche Verbindungen werden beispielsweise durch die allgemeine Formel

RG-R*-PG

dargestellt, wobei

RG     mindestens eine gegenüber Isocyanat reaktive Gruppe,
R*     einen 1 bis 20 Kohlenstoffatome enthaltenden aliphatischen, cycloaliphatischen oder aromatischen Rest, und
PG     mindestens eine polare Gruppe bedeutet.

Beispiele für RG sind Hydroxy, Thiol, primäres Amin und sekundäres Amin. Bevorzugt steht RG für Hydroxy und primäres Amin, besonders bevorzugt für Hydroxy.

Beispiele für R* sind aliphatische und cyclische, gesättigte und ungesättigte Kohlenwasserstoffe mit 1 bis 20 C-Atomen und unsubstituierte und substituierte aromatische Reste mit 6 bis 20 C-Atome, bevorzugt aliphatische und cyclische, gesättigte und ungesättigte Kohlenwasserstoffe mit 1 bis 12 C-Atomen.

Beispiele für PG sind Säuregruppen in der Säure- oder Salzform, beispielsweise Carbonsäuren, Schwefelsäure, Schwfelsäurehalbester, Phosphorsäuren, Sulfonsäuren, Phosphorsäurehalbestern, Phosphonsäuren, sowie die Salze davon.

Die Säuregruppen können in ihrer anionischen Formen vorliegen und weisen dann ein Gegenion auf. Beispiele für Gegenionen sind Alkali- und Erdalkaliionen, beispielsweise $Li^+$, $Na^+$, $K^+$, $Cs^+$, $Mg^{2+}$, $Ca^{2+}$ oder $Ba^{2+}$. Weiterhin können als Gegenion die von Ammoniak oder Aminen, insbesondere tertiären Aminen, abgeleiteten Ammoniumionen oder quartäre Ammoniumionen vorliegen, wie beispielsweise Ammonium, Methylammonium, Dimethylammonium, Trimethylammonium, Ethylammonium, Diethylammonium, Triethylammonium, Tributylammonium, Di-iso-propyl-ethylammonium, Benzyldimethylammonium, Monoethanolammonium, Diethanolammonium, Triethanolammonium, Hydroxyethyl-Dime-thylammonium, Hydroxyethyldiethylammonium, Monopropanolammonium, Dipropanolammonium, Tripropanolammoni-um, Piperidinium, Piperazinium, N,N'-Dimethylpiperazinium, Morpholinium, Pyridinium, Tetramethylammonium, Triethylmethylammonium, 2--Hydroxyethyl-trimethyl-ammonium, Bis-(2-Hydroxyethyl)-dimethylammonium oder Tris-(2-Hydroxyethyl)-methylammonium.

Weitere Beispiele für polare Gruppen PG sind Poly-$C_2$-$C_3$-alkylenoxid-Gruppen, z.B. Polyethylenoxid-Gruppen, Poly(ethylenoxid-co-propylenoxid)gruppen und Polypropylenoxid-Gruppen. Diese sind vorzugsweise einfach endgruppenverschlossen. Als Endgruppen kommen beispielsweise $C_1$-$C_{10}$-Alkyl, bevorzugt $C_1$-$C_4$-Alkyl bzw. die entsprechenden Methoxyalkyle in Betracht. Beispiele für Verbindungen RG-R*-PG , in denen PG für eine endgruppenverschlossene Poly-$C_2$-$C_3$-alkylenoxid-Gruppe steht, sind Methoxy(polyethylenglykol), Ethoxy(polyethylenglykol) und Butoxy(polyethylenglykol), insbesondere solche mit einem Molekulargewicht im Bereich von 200 bis 3000 g/mol (Zahlenmittel). Weitere Beispiele sind Dihydroxy-Verbindungen wie MPEG-Monoether auf Basis Trimethylolpropan, z.B. das Ymer™ N120 der Firma Perstorp, oder ethoxylierte Polyether-1,3-Diole, z.B. das Tegomer® D3403 der Firma Evonik Industries.

Bevorzugt sind die Verbindungen PU-M4 ausgewählt unter Hydroxycarbonsäuren, Aminocarbonsäuren und Aminosulfonsäuren, insbesondere unter solchen mit 3 bis 10 C-Atomen, und deren Salzen. Besonders bevorzugt sind die Verbindungen PU-M4 ausgewählt unter Dihydroxycarbonsäuren, Diaminocarbonsäuren und Diaminosulfonsäuren und deren Salzen.

Beispiele für aliphatischen Dihydroxycarbonsäuren sind 2,3-Dihydroxypropansäure, 2,2-Dimethylolpropionsäure, 2,2-Dimethylolbuttersäure und 2,2-Dimethylolpentansäure, deren Strukturisomere und die Salze davon. Beispiele für aliphatischen Diaminocarbonsäuren sind 2-Aminoethyl-2-aminoethancarbonsäure, deren Strukturisomere und die Salze davon. Beispiele für aliphatischen Diaminosulfonsäuren sind 2-Aminoethyl-2-aminoethansulfonsäure, deren Strukturisomere und die Salze davon.

Besonders bevorzugt ist die Verbindung PU-M4 ausgewählt unter Dimethylolpropionsäure, 2,2-Dimethylolbuttersäure, 2-Aminoethyl-2-aminoethansulfonsäure, 2-Aminoethyl-2-aminoethancarbonsäure und den Salzen davon.

Bevorzugt sind jeweils die Alkalisalze, beispielsweise die Natrium- und Kaliumsalze, die Ammoniumsalze und die Triethylammoniumsalze.

Die Verbindung PU-M5 ist ausgewählt unter von den Verbindungen PU-M1, PU-M2, PU-M3, und PU-M4 verschiedenen Verbindungen.

Bevorzugt ist die Verbindung PU-M5 ist ausgewählt unter Verbindungen, welche wenigstens eine gegenüber Isocyanat reaktive Gruppe aufweisen und von den Verbindungen PU-M2, PU-M3, und PU-M4 verschieden sind.

Mögliche Verbindungen PU-M5 sind Diamine, beispielsweise Hydrazin und Diamine wie beispielsweise Ethylendiamin, Propylendiamin, Hexamethylendiamin und Isophorondiamin.

Üblicherweise umfassen die Polyurethan-bildenden Verbindungen PU-M, bezogen auf die Gesamtmenge der Verbindungen PU-M, 5 bis 40 Gew.-%, bevorzugt 10 bis 25 Gew.-%, wenigstens einer Isocyanat-Komponente PU-M1.

Üblicherweise umfassen die Polyurethan-bildenden Verbindungen PU-M bezogen auf die Gesamtmasse der Verbindungen PU-M2, PU-M3, PU-M4 und PU-M5, 45 bis 100 Gew.-%, bevorzugt 70 bis 99,5 Gew-%, ganz besonders bevorzugt 78 bis 98 Gew.-% wenigstens einer Diolkomponente PU-M2.

Üblicherweise umfassen die Polyurethan-bildenden Verbindungen PU-M bezogen auf die Gesamtmasse der Verbindungen PU-M2, PU-M3, PU-M4 und PU-M5, 0 bis 20 Gew.-%, bevorzugt 0 bis 15 Gew.-%, ganz besonders bevorzugt 0 bis 10 Gew.-%, wenigstens einer Diol- oder Polyol-komponente PU-M3.

Üblicherweise umfassen die Polyurethan-bildenden Verbindungen PU-M bezogen auf die Gesamtmasse der Verbindungen PU-M2, PU-M3, PU-M4 und PU-M5, 0 bis 15 Gew.-%, bevorzugt 0,5 bis 10 Gew.-%, ganz besonders bevorzugt 2 bis 10 Gew.%, wenigstens einer Komponente PU-M4,

Üblicherweise umfassen die Polyurethan-bildenden Verbindungen PU-M bezogen auf die Gesamtmasse der Verbindungen PU-M2, PU-M3, PU-M4 und PU-M5, 0 bis 10 Gew.-%, bevorzugt 0 bis 5 Gew.-%, ganz besonders bevorzugt 0 bis 2 Gew. % von den Komponenten PU-M1, PU-M2, PU-M3, PU-M4 verschiedener Verbindungen PU-M5.

Bevorzugt umfassen die Polyurethan-bildenden Verbindungen PU-M:

a) 5 bis 40 Gew.-%, bevorzugt 10 bis 25 Gew.-% wenigstens einer Isocyanat-Komponente PU-M1, bezogen auf die Gesamtmasse der Verbindungen PU-M,
b1) 45 bis 100 Gew.-%, bevorzugt 70 bis 99,5 Gew.-% bezogen auf die Gesamtmasse der Verbindungen PU-M2, PU-M3, PU-M4 und PU-M5, wenigstens einer Diolkomponente PU-M2,
b2) 0 bis 20 Gew.-%, bevorzugt 0 bis 15 Gew.-% bezogen auf die Gesamtmasse der Verbindungen PU-M2, PU-M3, PU-M4 und PU-M5, wenigstens einer Diol- oder Polyol-komponente PU-M3,
c) 0 bis 15 Gew.-%, bevorzugt 0,5 bis 10 Gew.-%, bezogen auf die Gesamtmasse der Verbindungen PU-M2, PU-M3, PU-M4, PU-M5, wenigstens einer Komponente PU-M4,
d) 0 bis 10 Gew.-%, bevorzugt 0 bis 5 Gew.-% bezogen auf die Summe der Verbindungen PU-M2, PU-M3, PU-M4, PU-M5, von den Komponenten a) bis c) verschiedener Verbindungen PU-M5.

Das Polyurethan PU weist vorzugsweise weniger als 2 Gew.-%, bezogen auf das Gesamtgewicht des Polyurethans, und bevorzugt weniger als 1 Gew.-% und besonders bevorzugt weniger als 0,5 Gew.-% Harnstoffgruppen auf.

Das Polyurethan PU weist vorzugsweise weniger als 0,1 mol/kg, bevorzugt weniger als 0,05 mol/kg ethylenisch ungesättigte Bindungen auf.

Das Polyurethan PU weist vorzugsweise eine gewichtsmittlere Molmasse (Mw) im Bereich von 10000 bis 500000 g/mol, bevorzugt im Bereich von 15000 bis 100000 g/mol auf. Die Molmasse ist üblicherweise mittels Gelpermeations-Chromatografie (GPC) bestimmt.

Das Polyurethan PU liegt in Form von dispergierten Polyurethanpartikeln vor. Diese haben üblicherweise einen volumenmittleren Durchmesser von 30 bis 500 nm, bevorzugt von 50 bis 150 nm. Der volumenmittleren Durchmesser ist üblicherweise mittels Lichtdurchlässigkeit (LD%) und hydrodynamische Radius (HDC) bestimmt.

Die Monomerzusammensetzung PA-M umfasst radikalisch polymerisierbare, ethylenisch ungesättigte Verbindungen, beispielsweise Verbindungen, die genau eine ethylenisch ungesättigte C-C-Doppelbindung oder genau 2 konjugierte ethylenisch ungesättigte Doppelbindungen aufweisen. Mögliche Verbindungen sind ausgewählt unter $C_1$-$C_{20}$-Alkylacrylaten, $C_1$-$C_{20}$-Alkylmethacrylaten, Vinylestern von $C_1$-$C_{20}$-Carbonsäuren, Vinylaromatische Verbindungen mit bis zu 20 C-Atomen, ethylenisch ungesättigten Nitrilen, Vinylhalogeniden, Vinylethern von $C_1$-$C_{10}$-Alkoholen, aliphatischen $C_2$-$C_8$-Alkene mit 1 oder 2 Doppelbindungen oder Mischungen dieser Monomeren.

Die Monomerzusammensetzung PA-M weist eine theoretische Glasübergangstemperatur nach Fox von maximal +50° C, bevorzugt von maximal +30° C auf. Vorzugsweise weist die Monomerzusammensetzung PA-M eine theoretische Glasübergangstemperatur nach Fox von wenigstens -80° C, bevorzugt von wenigstens -50° C auf.

Die theoretische Glasübergangstemperatur nach Fox berechnet sich nach der Fox-Gleichung wie folgt

$$1/Tg = xA/TgA + xB/TgB + xC/TgC + \ldots\ldots$$

| | |
|---|---|
| Tg: | berechnete Glasübergangstemperatur des Copolymeren |
| TgA: | Glasübergangstemperatur des Homopolymeren von Monomer A |
| TgB, TgC: | Tg entsprechend für Monomere B, C, etc. |
| xA: | Massenanteil des Monomers A, (Masse Monomer A)/(Gesamtmasse Copolymer), |
| xB, xC | entsprechend für Monomere B, C etc. |

Die Monomerzusammensetzung PA-M enthält als Hauptkomponente wenigstens eine radikalisch polymerisierbare ethylenisch ungesättigte Verbindung, die eine Wasserlöslichkeit von < 60° C g/l bei 20° C und 1 bar aufweist. Bevorzugt weist diese wenigstens eine Verbindung, genau eine ethylenisch ungesättigte C-C-Doppelbindung oder genau 2 konjugierte ethylenisch ungesättigte Doppelbindungen auf. Mögliche Verbindungen sind ausgewählt unter $C_1$-$C_{20}$-Alkylacrylaten, $C_1$-$C_{20}$-Alkylmethacrylaten, Vinylestern von $C_1$-$C_{20}$-Carbonsäuren, Vinylaromatische Verbindungen mit bis zu 20 C-Atomen, Vinylhalogeniden, Vinylethern von $C_1$-$C_{10}$-Alkoholen, aliphatischen $C_2$-$C_8$-Alkene mit 1 oder 2 Doppelbindungen oder Mischungen dieser Monomeren.

$C_1$-$C_{20}$-Alkylacrylate und $C_1$-$C_{20}$-Alkylmethacrylate sind beispielsweise (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat und insbesondere auch Mischungen der (Meth)acrylsäurealkylester.

Vinylester von $C_1$-$C_{20}$-Carbonsäuren sind beispielsweise Vinyllaurat, Vinylstearat, Vinylpropionat, Versaticsäurevinylester und Vinylacetat.

Vinylaromatische Verbindungen sind beispielsweise Vinyltoluol, 2-Methylstyrol, 4-Methylstyrol, 2-Butylstyrol, 4-n-Butylstyrol, 4-n-Decylstyrol und vorzugsweise Styrol.

Vinylhalogenide sind beispielsweise mit Chlor, Fluor oder Brom substituierte ethylenisch ungesättigte Verbindungen, vorzugsweise Vinylchlorid und Vinylidenchlorid.

Vinylether sind beispielsweise Vinylmethylether, Vinylisobutylether und vorzugsweise Vinylether von $C_1$-$C_4$-Alkoholen.

Aliphatische $C_2$-$C_8$-Alkene mit 1 oder 2 Doppelbindungen sind beispielsweise Butadien, Isopren und Chloropren, Ethylen und Propylen.

Bevorzugt enthält die Monomerzusammensetzung PA-M die folgenden Komponenten:

a) 30 bis 100 Gew.%, bezogen auf die Gesamtmasse der Monomerzusammensetzung PA-M, wenigstens ein Monomer PA-M1;

b) 0 bis 70 Gew.%, bezogen auf die Gesamtmasse der Monomerzusammensetzung PA-M, wenigstens ein Monomer PA-M2, das ausgewählt ist unter vinylaromatischen Verbindungen, Vinylester von gesättigten, verzweigten und unverzweigten $C_1$-$C_{12}$-Carbonsäuren und zweifach ungesättigte, verzweigte und unverzweigte $C_4$-$C_8$-Alkene

c) 0 bis 20 Gew.-%, bezogen auf die Gesamtmasse der Monomerzusammensetzung PA-M, wenigstens ein radikalisch polymerisierbares ethylenisch ungesättigten, von PA-M1 und PA-M2 verschiedenes Monomer PA-M3.

Bevorzugt enthält die Monomerzusammensetzung PA-M wenigstens 30 Gew.-%, besonders bevorzugt wenigstens 50 Gew.-% und ganz besonders bevorzugt wenigstens 70 Gew.-%, bezogen auf das Gesamtgewicht von PA-M, wenigstens ein Monomer PA-M1, welches ausgewählt ist unter $C_1$-$C_{20}$-Alkylestern der Acrylsäure, $C_1$-$C_{20}$-Alkylestern der Methacrylsäure und Mischungen davon.

Zu nennen sind als Beispiele für (Meth)acrylsäurealkylester: (Meth)acrylsäuremethylester, (Meth)acrylsäureethylester, (Meth)acrylsaure-n-propylester, (Meth)acrylsäure-n-butylester, (Meth)acrylsaure-iso-butylester, (Meth)acrylsäuresek-butylester, (Meth)-acrylsäure-tert-butylester, (Meth)acrylsäure-n-pentylester, (Meth)acrylsäure-iso-pentylester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Bevorzugte Monomere PA-M1 sind die $C_1$-$C_{10}$-Alkylacrylate und $C_1$-$C_{10}$-Alkylmethacrylate, insbesondere $C_1$-$C_8$-Alkylacrylate und $C_1$-$C_8$-Alkylmethacrylate, wobei die Acrylate und Mischungen von Acrylaten mit Methacrylaten jeweils besonders bevorzugt sind. Ganz besonders bevorzugt sind Methylacrylat, Ethylacrylat, n-Butylacrylat, n-Hexylacrylat, Octylacrylat, 2-Etyhlhexylacrylat und Mischungen dieser Monomere sowie Mischungen dieser Monomere mit Methylmethacrylat.

In einer Ausführungsform enthält die Monomerzusammensetzung PA-M ausschließlich Monomere PA-M1.

In einer anderen Ausführungsform enthält die Monomerzusammensetzung PA-M neben den Monomeren PA-M1 wenigstens ein weiteres Monomer PA-M2, welches ausgewählt ist unter vinylaromatischen Verbindungen, Vinylestern von gesättigten, verzweigten und unverzweigten $C_1$-$C_{12}$-Carbonsäuren und zweifach ungesättigten, verzweigten und unverzweigten $C_4$-$C_8$-Alkenen.

Bevorzugte Monomere M2 sind die oben genannten, insbesondere vinylaromatische Verbindungen, vorzugsweise Vinyltoluol, 2-Methylstyrol, 4-Methylstyrol, 2-Butylstyrol, 4-n-Butylstyrol, 4-n-Decylstyrol. Besonders bevorzugt ist Styrol.

Bevorzugt enthält die Monomerzusammensetzung PA-M wenigstens 0 bis 70 Gew.-%, besonders bevorzugt 0 bis 50 Gew.-% und ganz besonders bevorzugt 0 bis 30 Gew.-%, bezogen auf das Gesamtgewicht von PA-M, wenigstens ein Monomer PA-M2.

In einer besonderen Ausführungsform besteht die Monomerzusammensetzung PA-M ausschließlich aus Monomeren, die ausgewählt sind unter PA-M1 und PA-M2.

Die Monomerzusammensetzung kann weitere, von den Monomeren PA-M1 und PA-M2 verschiedene Monomere PA-M3 enthalten. Mögliche Monomere PA-M3 können beispielsweise Monomere mit Carbonsäure-, Sulfonsäure-, Phosphorsäurehalbester- oder Phosphonsäuregruppen sein, beispielsweise Acrylsäure, Methacrylsäure, Itaconsäure, Maleinsäure oder Fumarsäure, Hydroxylgruppen enthaltende Monomere sein, beispielsweise $C_1$-$C_{10}$-Hydroxyalkyl(meth)acrylate, (Meth)acrylamid und Ureidogruppen enthaltende Monomere wie Ureido(meth)acrylate, Monomere mit Phenyloxyethylglykolmono(meth)acrylat, Glycidylacrylat, Glycidylmethacrylat, und Amino(meth-)acrylate wie 2-Aminoethyl(meth-)acrylat.

Die theoretische Glastemperatur des Polymers, welches aus der Monomerzusammensetzung PA-M aufgebaut ist, liegt bevorzugt im Bereich von -80 bis +50 ° C, besonders bevorzugt im Bereich von -50 bis +30 ° C.

Die Polymerisation der Monomerzusammensetzung PA-M wird üblicherweise in Gegenwart eines Polymerisationsinitiators durchgeführt.

Als Polymerisationsinitiator alle üblichen, dem Fachmann bekannten Initiatoren in Betracht. Wird die Polymerisation bei erhöhten Temperaturen durchgeführt, so ist die alleinige Verwendung eines rein thermisch zerfallenden Initiators, z.B. auf Basis einer Peroxid- oder Azo-Verbindung, welcher eine bei der gewünschten Rektionstemperatur ausreichende Zerfallsrate aufweist, ausreichend. Beispiele solcher Verbindungen sind die als Verbindungen (I1) hierin genannten. Soll die Polymerisation jedoch bei niedrigeren Temperaturen erfolgen, wird üblicherweise eine Redoxinitiatorsystems (I) bestehend aus einer oxidierenden (I1) und einer reduzierenden Komponente (I2) verwendet.

Optional können zusätzlich zum Polymerisationsinitiator bzw. dem Redoxinitiatorsystem (I) Verbindungen zugesetzt werden, welche wenigstens ein Übergangsmetall umfassen und den Zerfall des Initiators bzw. des Initiatorsystems katalysieren. Als Beispiele hierfür seien Eisen-Komplexe wie Dissolvine® E-FE-6 oder E-FE-13 der Firma Akzo-Nobel genannt.

Als Polymerisationsinitiatoren kommen im Rahmen der vorliegenden Erfindung insbesondere Redoxinitiatorsysteme (I) aus einer oxidierenden (I1) und einer reduzierenden Komponente (I2) in Betracht, die in der Lage sind, eine radikalische Emulsionspolymerisation in wässerigen Medien auszulösen. Sie werden im Allgemeinen in Mengen von 0,1 bis 10 Gew.-%, vorzugsweise von 0,2 bis 4 Gew.-%, bezogen auf die Gesamtmenge der Monomerzusammensetzung, eingesetzt.

Übliche Verbindungen (I1) sind anorganische Peroxide, beispielsweise Natriumperoxidisulfat, Ammoniumperoxidisulfat und Wasserstoffperoxid, organische Peroxide beispielsweise Dibenzoylperoxid und tert-Butylhydroperoxid und Azoverbindungen, beispielsweise Azoisobuttersauredinitril.
Bevorzugte Verbindungen sind Dibenzoylperoxid und tert-Butylhydroperoxid.

Als weitere Beispiele seien genannt Peroxodisulfate, beispielsweise Kalium-, Natrium- oder Ammoniumperoxodisulfat, Peroxide, beispielsweise Natriumperoxid oder Kaliumperoxid, Perborate, beispielsweise Ammonum-, Natrium- oder Kaliumperborat, Monopersulfate, beispielsweise Ammonium-, Natrium- oder Kaliumhydrogenmonopersulfat, Salze von Peroxycarbonsäuren, beispielsweise Ammonium-, Natrium-, Kalium- oder Magnesium-monoperoxyphthalat, tert-Butylhydroperoxid, tert-Amylhydroperoxid, Cumylhydroperoxid, Peressigsäure, Perbenzoesäure, Monoperphthalsäure oder meta-Chlorperbenzoesäure, sowie Ketonperoxide, Dialkylperoxide, Diacylperoxide oder gemischte Acyl-Alkylperoxide. Beispiele für Diacylperoxide sind Dibenzoylperoxid und Diacetylperoxid. Beispiele für Dialkylperoxide sind Di-tert-butylperoxid, Dicumylperoxid, Bis-(a,a-dimethylbenzyl)peroxid und Diethylperoxid. Ein Beispiel für gemischte Acyl-Alkylperoxide ist tert-Butylperbenzoat. Ketonperoxide sind beispielsweise Acetonperoxid, Butanonperoxid und 1,1'-Peroxybiscyclohexanol. Weiterhin genannt seien beispielsweise 1,2,4-Trioxolan oder 9,10-Dihydro-9,10-epidioxidoanthracen.

Reduzierende Co-Initiatoren (I2) sind bevorzugt Hydroxymethansulfinsäure, Aceton-Bisulfit, Isoascorbinsäure und Ascorbinsäure sowie jeweils deren Derivate und Salze, bevorzugt die Natriumsalze, besonders bevorzugt eingesetzt werden Ascorbinsäure, das Natriumerythorbat und das Natriumsalz von Hydroxymethansulfinsäure. Letzteres ist beispielsweise als Rongalit C der BASF oder als Bruggolite SFS von der Firma Bruggemann erhältlich.

In einer anderen Ausführungsform wird die Polymerisation der Monomerzusammensetzung PA-M ohne einen Polymerisationsinitiator durchgeführt. In diesem Fall kann die Polymerisation beispielsweise durch Strahlung oder durch thermische Energie initiiert werden.

Das Gewichtsverhältnis des Polyurethans PU zu den polymerisierten Monomeren PA-M liegt vorzugsweise im Bereich von 5:95 zu 95:5, insbesondere im Bereich vom 30:70 bis 70:30.

In der erfindungsgemäßen Polymerdispersion weisen die Polymerpartikel typischerweise eine mittlere Teilchengröße, z-Mittelwert gemessen mittels dynamischer Lichtstreuung, im Bereich von 0,01 bis 2,0 $\mu$ m, bevorzugt von 0,02 bis 0,4 $\mu$ m, auf. Bevorzugt beträgt die mittlere Teilchengröße weniger als 2,0 $\mu$ m, bevorzugt weniger als 0,4 $\mu$ m.

Die erfindungsgemäße wässrige Polymerdispersion weist in der Regel einen Feststoffgehalt im Bereich von 10 bis 75 %, bevorzugt im Bereich von 20 bis 65 % und besonders bevorzugt im Bereich von 25 bis 55 % auf.

Ein weiterer Gegenstand der Erfindung ist ein Verfahren zur Herstellung einer erfindungsgemäßen wässrigen Polymerdispersion, umfassend die Schritte A) und B)

Bevorzugt erfolgt der Schritt A), die Bereitstellung einer wässrigen Polymerdispersion wenigstens eines Polyurethans PU in Form von dispergierten Polyurethanpartikeln, welches wie oben definiert ist, so, dass

A1) man zunächst eine Monomerzusammensetzung umfassend Polyurethanbildende Verbindungen PU-M in Gegenwart eines Lösungsmittels in einer Polyaddition polymerisiert,
A2) und anschließend das Polyurethan in Wasser dispergiert.

Die Herstellung des Polyurethans erfolgt nach dem Fachmann bekannten Methoden.

Die Herstellung kann beispielsweise so erfolgen, dass die Isocyanatkomponente PU-M1 mit den Komponenten PU-M2, PU-M3, PU-M4 und gegebenenfalls PU-M5 zur Reaktion gebracht, wobei die reaktiven Gruppen der Komponenten PU-M2, PU-M3, PU-M4 und gegebenenfalls PU-M5 mit den Isocyanatgruppen der Komponente PU-M1 abreagieren. Die Komponenten PU-M2, PU-M3, PU-M4 und gegebenenfalls PU-M5 werden dabei typischerweise in einer Menge eingesetzt, die etwa der geforderten Stöchiometrie und den gewünschten Massenanteilen entspricht. Insbesondere werden die Isocyanatkomponente PU-M1 und die Komponenten PU-M2, PU-M3, PU-M4 und gegebenenfalls PU-M5 in einer solchen Menge eingesetzt, dass das Molverhältnis der Isocyanatgruppen in PU-M1 zur Gesamtmenge der funktionellen Gruppen in den Komponenten PU-M2, PU-M3, PU-M4 und gegebenenfalls PU-M5, welche mit den Isocyanatgruppen unter Ausbildung kovalenter Bindungen reagieren, im Bereich von 1 : 1,1 bis 1,1 : 1 liegt. Insbesondere beträgt das Molverhältnis Isocyanatgruppen in PU-M1 zur Gesamtmenge der funktionellen Gruppen in den Komponenten PU-M2, PU-M3, PU-M4 und gegebenenfalls PU-M5 wenigstens 1 : 1 und liegt speziell im Bereich von 1 : 1 bis 1,05 : 1.

Zur Herstellung wird man in der Regel so vorgehen, dass man wenigstens einen Teil, z. B. wenigstens 75 %, insbesondere wenigstens 90 % und speziell die Gesamtmenge der Komponenten PU-M2, PU-M3, PU-M4 und gegebenenfalls PU-M5 vorlegt und hierzu die Komponente PU-M1 gibt. Die Zugabe der Komponente PU-M1 kann unter Reaktionsbedingungen erfolgen. Vorzugsweise wird man jedoch die Komponente PU-M1 erst zugeben und dann Reaktionsbedingungen einstellen, bei der die Reaktion der Isocyanatgruppen mit den reaktiven funktionellen Gruppen der Komponenten PU-M2, PU-M3, PU-M4 und gegebenenfalls PU-M5 stattfindet.

Die Umsetzung der Komponente PU-M1 mit den Komponenten PU-M2, PU-M3, PU-M4 und gegebenenfalls PU-M5 erfolgt in der Regel bei Temperaturen im Bereich von 20 bis 180° C, bevorzugt im Bereich von 40 bis 100° C, besonders bevorzugt im Bereich von 50 bis 90° C. Während der Umsetzung kann die Temperatur gleich bleiben oder kontinuierlich oder stufenweise erhöht werden.

Die Polyaddition der Verbindungen PU-M kann bei Unterdruck, Überdruck oder Normaldruck erfolgen. Im Allgemeinen erfolgt die Reaktion unter Normaldruck.

Die Umsetzung wird in der Regel so lange durchgeführt, bis der NCO-Wert den theoretischen Umsatzwert zu mindestens 95 %, bevorzugt zu mindestens 97 % und besonders bevorzugt zu mindestens 98 % erreicht hat. Vorzugsweise erfolgt die Umsetzung so lange, bis der Gehalt an Isocyanatgruppen im Reaktionsgemisch einen Wert von 1 Gew.-%, insbesondere 0,5 Gew.-% nicht überschreitet. Die hierfür erforderlichen Reaktionszeiten liegen, abhängig von der gewählten Reaktionstemperatur, üblicherweise im Bereich von 3 bis 20 Stunden, insbesondere im Bereich von 5 bis 12 Stunden. Vorzugsweise erfolgt die Umsetzung unter Durchmischung des Reaktionsgemischs, beispielsweise unter Rühren und/oder Umpumpen.

Die Umsetzung wird bevorzugt durch Zugabe wenigstens eines geeigneten Katalysators beschleunigt. Solche Katalysatoren sind literaturbekannt, beispielsweise aus G. Oertel (Hrsg.), Polyurethane, 3. Auflage 1993, Carl Hanser Verlag, München - Wien, Seiten 104 bis 110, Kapitel 3.4.1. "Katalysatoren".

Geeignete Katalysatoren sind organische Amine, insbesondere tertiäre aliphatische, cycloaliphatische oder aromatische Amine, Brønsted-Säuren und/oder Lewis-saure organische Metallverbindungen, wobei Letztere bevorzugt sind. Geeignet sind auch Gemische der vorgenannten Katalysatoren.

Beispiele für Lewis-saure organische Metallverbindungen sind

- Zinnverbindungen, insbesondere Zinn-(II)-salze von organischen Carbonsäuren, z. B. Zinn-(II)-diacetat, Zinn-(II)-dioctoat, Zinn-(II)-bis(ethylhexanoat) und Zinn-(II)-dilaurat und die Dialkylzinn-(IV)-salze von organischen Carbonsäuren, z. B. Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat;
- Zink-Salze von organischen Carbonsäuren, z. B. Zink-(II)-diacetat, Zink-(II)-dioctoat, Zink-(II)-bis(ethylhexanoat), Zink(II)-neodecanoat (Zink-(II)-bis(7,7-dimethyloctanoat) und Zinn-(II)-dilaurat;
- Wismutverbindungen, z. B. Wismut-carboxylate, insbesondere von Carboxylaten, die mindestens sechs Kohlenstoffatome aufweisen, z. B. Wismut-octoate, -ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland;
- Acetylacetonate des Eisens, Titans, Aluminiums, Zirkons, Mangans, Nickels, Zinks und Cobalts;
- Zirkonium-, Titan-und Aluminium-Verbindungen, z. B. Zirkoniumtetraacetylacetonat (z. B. K-KAT® 4205 der Firma King Industries); Zirkoniumdionate (z. B. K-KAT® XC-9213; XC-A 209 und XC-6212 der Firma King Industries); Aluminiumdionat (z. B. K-KAT® 5218 5 der Firma King Industries).

Weitere Metallkatalysatoren werden von Blank et al. in Progress in Organic Coatings, 1999, Vol. 35, Seiten 19-29 beschrieben.

Vorzugsweise werden keine Dialkylzinn-(IV)-salze eingesetzt. Vorzugsweise werden Zink-Katalysatoren eingesetzt. Unter den Zink-Katalysatoren sind die Zinkcarboxylate bevorzugt, besonders bevorzugt solche von Carboxylaten, die mindestens sechs Kohlenstoffatome, ganz besonders bevorzugt mindestens acht Kohlenstoffatome aufweisen, insbesondere Zink-(II)-diacetat oder Zink-(II)-dioctoat oder Zink-(II)neodecanoat. Handelsübliche Katalysatoren sind beispielsweise Borchi® Kat 22 von OMG Borchers GmbH, Langenfeld, Deutschland sowie TIB KAT 616, TIB KAT 620 und TIB KAT 635 jeweils von TIB Chemicals AG, Mannheim, Deutschland.

Es ist möglich, die Wirkung der Katalysatoren zusätzlich durch Anwesenheit von Säuren zu verstärken, beispielsweise durch Säuren mit einem pKa-Wert von < 2,5, wie beschrieben in EP 2316867 A1 oder mit einem pKa-Wert zwischen 2,8 und 4,5, wie beschrieben in WO 04/029121 A1. Bevorzugt ist die Verwendung von Säuren mit einem pKa-Wert von nicht mehr als 4,8, besonders bevorzugt von nicht mehr als 2,5.

Es ist auch denkbar, die Reaktion ohne Katalysator durchzuführen, in diesem Fall muss das Reaktionsgemisch jedoch höheren Temperaturen und/oder längeren Reaktionszeiten ausgesetzt werden.

Die Reaktion erfolgt bevorzugt in einem aprotischen organischen Lösungsmittel. Beispiele hierfür sind aliphatische Ketone, insbesondere solche mit 3 bis 8 C-Atomen, Mono-$C_1$-$C_4$-alkylester aliphatischer Monocarbonsäuren, insbesondere Ester der Essigsäure, aliphatische Ether, z. B. Di-$C_1$-$C_4$-alkylether und deren Gemische sowie Gemische mit Kohlenwasserstoffen. Bevorzugte Lösungsmittel sind aliphatische Ketone, insbesondere solche mit 3 bis 8 C-Atomen wie Aceton, Methylethylketon, Diethylketon und Cyclohexanon und deren Gemische. Die Menge an Lösungsmittel wird in der Regel so gewählt, dass die Viskosität der Reaktionsmischung eine Durchmischung erlaubt und gleichzeitig die Konzentration der Reaktanden möglichst hoch ist.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflusst wird.

Als Polymerisationsapparate kommen Ruhrkessel in Betracht, insbesondere dann, wenn durch Mitverwendung von Lösungsmitteln für eine niedrige Viskosität und eine gute Wärmeabfuhr gesorgt ist.

Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Die mittlere Teilchengröße (z-Mittelwert), gemessen mittels dynamischer Lichtstreuung mit dem MalvernB Autosizer 2 C, der so hergestellten Polyurethandispersionen ist nicht erfindungswesentlich und betragt im allgemeinen weniger als 1000 nm, bevorzugt weniger als 500 nm, besonders bevorzugt weniger als 200 nm. Ganz besonders bevorzugt liegt die mittlere Teilchengröße im Bereich von 20 bis 200 nm.

Die Polyurethandispersionen haben im Allgemeinen einen Feststoffgehalt von 10 bis 75 Gew.-%, bevorzugt von 20 bis 65 Gew.-% und eine Viskosität im Bereich von 10 bis 500 mPa·s (ICI Kegelplatten Viskosimeter mit Messkopf C in Anlehnung an ASTM D4287), gemessen bei einer Temperatur von 20° C und einer Schergeschwindigkeit von 250 s$^{-1}$).

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Das Dispergieren in Schritt A2) erfolgt nach dem Fachmann bekannten Methoden, beispielsweise unter Verwendung von Ultraschall. Durch die Zugabe von weiterem Lösungsmittel kann das Dispergieren erleichtert werden.

Bevorzugt erfolgt der Schritt B), die radikalische Polymerisation einer Monomerzusammensetzung PA-M so, dass

B1) man zunächst einen Teil des Polymerisationsinitiators und einen Teil der Monomerzusammensetzung PA-M zur wässrigen Polymerdispersionen des Polyurethans PU gibt und die Polymerisation initiiert,
B2) nach wenigstens teilweiser Polymerisation der in der Polymerdispersionen enthaltenen Monomere der Monomerzusammensetzung PA-M weitere Monozusammensetzung PA-M zugegeben wird.

Die Zugabe in Schritt B2) kann kontinuierlich oder diskontinuierlich erfolgen.

In einer bevorzugten Ausführungsform erfolgt die Zugabe in Schritt B) so, dass das Polyurethan (PU) vorgelegt wird, und die Polymerisation durch Zugabe des Initiators und einen Teil der Monomerzusammensetzung (PA-M) gestartet wird. Nach vollständiger oder teilweiser Abreaktion der Monomere der Monomerzusammensetzung (PA-M) wird dann weitere Monomerzusammensetzung (PA-M) zugeführt und die Polymerisierung bis zum im Wesentlichen vollständigen Umsatz geführt.

In einer weiteren bevorzugten Ausführungsform legt man das Polyurethan (PU) vor und gibt einen Teil der Monomerzusammensetzung (PA-M) und einen Teil des Initiators zum Starten gleichzeitig dosiert zu. Nach vollständiger oder teilweiser Abreaktion der Monomere der Monomerzusammensetzung (PA-M) wird dann weitere Monomerzusammensetzung (PA-M) zugeführt und die Polymerisierung bis zum im Wesentlichen vollständigen Umsatz geführt.

In beiden beschriebenen Ausführungsformen kann die Monomerzusammensetzung auf mehrere Zulaufe verteilt werden und unabhängig voneinander mit variabler Dosierungsgeschwindigkeit und/oder variablem Gehalt an einem oder mehreren Monomeren versehen werden.

"Im wesentlich vollständiger Umsatz" bedeutet einen Umsatz von mehr als 85 %, bevorzugt mehr als 95 %, und besonders bevorzugt mehr als 98 %, bezogen auf die Gesamtmenge an eingesetzter Monomerzusammensetzung (PA-M).

Die Zugabe des Initiators oder des Initiatorsystems kann kontinuierlich oder diskontinuierlich erfolgen.

Bevorzugt erfolgt die Zugabe des Initiators oder des Initiatorsystems in mehreren Schritten.

Der Initiator oder das Initiatorsystem kann auf mehrere Zulaufe verteilt werden und unabhängig voneinander mit variabler Dosierungsgeschwindigkeit und/oder variablem Gehalt an einem oder mehreren Komponenten versehen werden.

Sofern der Initiator oder das Initiatorsystem mehrere Komponenten umfasst, können diese nacheinander oder gleichzeitig zugegeben werden. Die reduzierende Komponente (I2) des Initiators (I) wird in der Regel kurz nach Start der Zugabe der Komponente (I1) zugegeben, kann aber auch gleichzeitig mit der Komponente (I1) zugegeben werden.

In einer bevorzugten Ausführungsform wird ein Teil des Initiators oder des Initiatorsystems nach der Beendeten Zugabe der Monomerzusammensetzung zugegeben.

Optional können auch Molmasseregler anwesend sein. Durch die Anwesenheit von Molmassereglern in einer Polymerisierung wird durch Kettenabbruch und Start einer neuen Kette durch das so entstandene neue Radikal in der Regel de Molmasse des entstehenden Polymers verringert und bei Anwesenheit von Vernetzern auch die Anzahl der Vernetzungsstellen (Vernetzungsdichte) verringert. Wird im Verlauf einer Polymerisierung die Konzentration an Regler erhöht, so wird die Vernetzungsdichte im Verlauf der Polymerisierung weiter verringert. Derartige Molmasseregler sind bekannt, beispielsweise kann es sich um Mercaptoverbindungen handeln, wie bevorzugt tertiäres Dodecylmercaptan, n-Dodecylmercaptan, iso-Octylmercaptopropionsäure, Mercaptopropionsäure, dimeres a-Methylstyrol, 2-Ethylhexylthioglykolsäureester (EHTG), 3-Mercaptopropyltrimethoxysilan (MTMO) oder Terpinolen. Die Molmasseregler sind bekannt und beispielsweise beschrieben in Houben-Weyl, Methoden der organische Chemie, Bd. XIVII, S. 297 ff., 1961, Stuttgart.

Die Polymerisierung wird erfindungsgemäß bei einer Temperatur von nicht mehr als 95° C durchgeführt. Bevorzugt liegt die Temperatur im Bereich von 50 bis 85° C, besonders bevorzugt im Bereich von 60 bis 85° C.

Die wässrigen Polymerdispersionen können nach der Herstellung, falls gewünscht, einer physikalischen Desodorierung unterworfen werden. Eine physikalische Desodorierung kann darin bestehen, dass die Polymerdispersionen mit Wasserdampf, einem sauerstoffhaltigen Gas, bevorzugt Luft, Stickstoff oder überkritischem Kohlendioxid beispielsweise in einem Rührbehälter, wie in der DE-AS 12 48 943 beschrieben, oder in einer Gegenstromkolonne, wie in der DE-A 196 21 027 beschrieben, gestrippt wird.

Ein weiterer Gegenstand der Erfindung ist die Verwendung einer erfindungsgemäßen wässrigen Polymerdispersion zur Herstellung von Klebstoffen sowie die Verwendung einer wässrigen Polymerdispersion, welche nach dem erfindungsgemäßen Verfahren hergestellt wurde, zur Herstellung von Klebstoffen.

Bevorzugte Klebstoffe sind Haftklebstoffe zur Herstellung von Klebeetiketten, Klebebändern, Pflastern, Bandagen und selbstklebenden Folien.

Die Klebstoffe können weitere Additive enthalten, beispielsweise Füllstoffe, Farbstoffe, Verlaufshilfsmittel und insbesondere Tackifier (klebrigmachende Harze).

Tackifier sind beispielsweise Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit. Die Gewichtsmenge der Tackifier beträgt beispielsweise 5 bis 100 Gew.-Teile, besonders bevorzugt 10 bis 50 Gew.-Teile. bezogen auf 100 Gew.-Teile der Klebstoffzusammensetzung.

Ein weiterer Gegenstand der Erfindung sind Haftklebstoffartikel, wobei mindestens ein Teil einer Substratoberfläche

i) mit mindestens einer erfindungsgemäßen wässrigen Polymerdispersion und/oder
ii) mit mindestens einer wässrigen Polymerdispersion, welche nach dem erfindungsgemäßen Verfahren hergestellt wurde

beschichtet ist.

Bei dem Substrat kann es sich z. B. um Papier, Kunststofffolien aus Polyolefinen oder Polyvinylchlorid handeln.

Beispiele

Es werden folgende Produkte und Abkürzungen verwendet:

Polyisocyanat-1: Polyisocyanat auf Basis von HDI mit einer NCO-Funktionalität von ..., lösemittel-frei; beispielsweise erhältlich als Basonat® HI 100 der Firma BASF SE

PPG-diol-1: Poly(propylenglykol)diol mit Mw ≈ 2000 g/mol und OH-Zahl = 55; beispielsweise erhältlich als Lupranol® 1000/1 der Firma BASF SE

PPG-diol-2: Poly(propylenglykol)diol mit Mw ≈ 4000 g/mol und OH-Zahl = 28; beispielsweise erhältlich als Luprano® 1005/1 der Firma BASF SE

EP-PO-EO-Copolymer: Ethylenoxid/Propylenoxid/Ethylenoxid-Blockcopolymer mit einem Propylenoxid-Anteil von 90 % und Mw ≈ 1000 g/mol; beispielsweise erhältlich als Pluronic® PE 3100 der Firma BASF SE

Polyesterol-1: aliphatisches Polyesterol mit Mw ≈ 2000 g/mol und OH-Zahl = 56; beispielsweise erhältlich als Lupraphen® 6607/1 der Firma BASF SE

Polyesterol-2: aromatisches Polyesterol mit Mw ≈ 2000 g/mol und OH-Zahl = 56; beispielsweise erhältlich als Lupraphen® 7600/1 der Firma BASF SE

Polyesterol-3: Polyesterol auf Basis Dimerfettsäure mit Mw ≈ 2000 g/mol und OH-Zahl = 56; beispielsweise erhältlich als Priplast® 3192 der Firma Croda

Polycarbonatdiol-1: aliphatisches Polycarbonatdiol mit Mw ≈ 2000 g/mol und OH-Zahl = 56; beispielsweise erhältlich als Desmophen® C2200 der Firma Bayer MaterialScience

Dipropylenglykoldimethylether: Dipropylenglykoldimethylether-Gemisch, beispielsweise erhältlich als Proglyde™ DMM der Firma Dow

Dissolvine® E-Fe-6: Ethylendiamintetraessigsäure, Eisen Kalium Salz

Rongalit© C: Natriumhydroximethansulfinat-Dihydrat

E316: Natriumerythorbat

TEGO® Foamex 831: Mischung entschäumender und entlüftender Substanzen, silikonfrei. Formulierung auf Basis hydrophober organischer Wirkstoffe und disperser Feststoffe, silicon- und mineralölfrei; Entschäumer der Firma Evonik.
Afranil MG: Wasseremulgierbare Entschäumer mit aliphatischen, HydroxyVerbindungen; Entschäumer der Firma BASF SE

Es werden folgende Abkürzungen verwendet:

tBHP: tert- Butylhydroperoxid
EHA: 2-Ethyl-hexylacrylat
S: Styrol
EA: Ethylacrylat
MA: Methylacrlyat
MMA: Methylmethacrylat
nBA: n-Butylacrylat
GMA: Glycidylmethacrylat
HPA: Hydroxypropylacrylat
VAc: Vinylacetat
DMF: Dimethylformamid
HCl: Chlorwasserstoff
Bromphenolblau: 3,3',5,5'-Tetrabrom-phenolsulfonphthalein
NMP: 1-Methyl-2-pyrrolidon
FG: Feststoffgehalt
upm: Umdrehungen pro Minute

Sofern nicht anders angegeben, werden folgende Analysemethoden verwendet:

HDC (hydrodynamische Radius)

Der hydrodynamische Radius wird über hydrodynamische Chromatographie bestimmt. In jeder Probe wird ein Marker 45 Sekunden nach der Probe zugesetzt, der die Teilchengröße mit der Durchflussdauer verbindet. So kann aus der Durchflussdauer, der Retentionszeit, die genaue Teilchengröße bestimmt werden.

LD (Lichtdurchlässigkeit)

Die Lichtdurchlässigkeit beschreibt eine Messgröße um Teilchengrößenunterschiede zu bestimmen. Hierbei wird die Polymerdispersion auf 0,01 % Feststoffgehalt verdünnt und die Lichtdurchlässigkeit im Vergleich zu reinem Wasser gemessen.

Tg (berechnet)

Die Glasübergangstemperatur Tg, berechnet sich nach der Fox-Gleichung aus der Glasübergangstemperatur der Homopolymerisate der im Copolymerisat vorhandenen Monomeren und deren Gewichtsanteile wie folgt:

$$1/Tg = xA/TgA + xB/TgB + xC/TgC + \ldots\ldots$$

Tg:         berechnete Glasübergangstemperatur des Copolymeren
TgA:        Glasübergangstemperatur des Homopolymeren von Monomer A
TgB, TgC:   Tg entsprechend für Monomere B, C, etc.
xA:         Masse Monomer A/Gesamtmasse Copolymer,
xB, xC      entsprechend für Monomere B, C etc.

K-Wert

Der K-Wert ist ein Maß für die mittlere Molmasse bzw. für die Viskosität. Um den K-Wert zu bestimmen, wird eine 1 %ige DMF-Lösung hergestellt und die Messtemperatur beträgt 25° C. In einem Lauda Thermostaten CD 30 und angeschlossenem Kühlgerät DLK 30 werden die Viskositäten der einzelnen Proben gemessen. Dazu werden Viskosimeter vom Typ Ubbelohde, Größe 1 verwendet. Zur Erfassung der Durchflußgeschwindigkeiten wird ein Lauda-Viskosimeter S verwendet und die Auswertung erfolgt über einen Epson HX-20 Rechner.

NCO-Wert

In einem 250 ml Erlenmeyer-Kolben werden ohne Rührstäbchen 100 ml NMP und 10 ml Messlösung gegeben und 1 bis 2 g Probe genau eingewogen, danach mit Rührstäbchen auf Magnetrührer bis zur völligen Auflösung gerührt, mit 0,1 N HCl-Lösung zurücktitriert bis zur Grünfärbung. Für die Messlösung werden 25,84 g Dibutylamin (p.A.) und 0,15 g Bromphenolblau auf der Analysenwaage in 2 l Messkolben eingewogen, mit NMP auf 2 l aufgefüllt und anschließend durchmischt bis alles gelöst ist.

NCO-Berechnungsformel:

$$[\text{Blindwert (ml) - Verbr. HCl (ml) x 42 (MG NCO)}] / [\text{Einwaage Probe (g) x 100}].$$

Blindwert:

In einem 250 ml Erlenmeyer-Kolben werden 100 ml NMP und 10 ml Messlösung gegeben und unter Rühren mit 0,1 N HCl-Lösung zurücktitriert bis zum Farbumschlag von blau nach grün. Der Blindwert entspricht dem ml-Verbrauch der HCl-Lösung.

GPC (Gelpermeationschromatographie)

Die Bestimmung des zahlenmittleren und gewichtsmittleren Molmasse $M_n$ und $M_w$ beziehen sich hier, sofern nichts anderes angegeben ist, auf gelpermeationschromatographische Messungen via Größenausschluss-Chromatographie gemäß DIN 55672-2:2008:06, wobei Polymethylmethacrylat als Standard und Tetrahydrofuran als Elutionsmittel verwendet wurden.
Soweit nicht anders angegeben wurden die folgenden Geräteparameter verwendet:

| | |
|---|---|
| Gerät: | PSS Agilent Technologies 1260 Infinity |
| Säulen: | 1x PLGel Mixed E Guard (Vorsäule), Länge 5 cm, Durchmesser 0,75 cm |
| | 1x PLGel Mixed E, Länge 30 cm, Durchmesser 0,75 cm |
| | 1x PLGel Resipore, Länge 30 cm, Durchmesser 0,75 cm |

Lösungsmittel: THF
Flussrate: 1 mL/min
Injektionsvolumen: 50 µL
Konzentration: 1 g/L
Temperatur: Raumtemperatur (20° C)

FFF (Feldflussfraktionierung)

Für Proben, deren Molmasse $M_w$ aufgrund signifikanter Gel-Anteile (= trübe THF-Lösung) nicht mittels GPC ermittelt werden konnte, erfolgte die Bestimmung des Gelgehalts sowie der mittleren Molmasse $\dot{M}_w$ mittels Feldflussfraktionierung FFF. Zur Bestimmung der Feldflussfraktionierung FFF wurde die kolloidale Probe (7 g/l in THF) durch den Querfluss in einem schmalen Fraktionierungskanal nach dem hydrodynamischen Radius aufgetrennt; als Elutionsmittel wurde THF verwendet. Der Radius aller Fraktionen wurde aus der Winkelverteilung des Vielwinkel-Lichtstreudetektors abgelesen, die Molmasse jeder Fraktion resultieren aus dem Vergleich von Brechungsindex-Detektor und Lichtstreudetektor; für die Auswertung wurde dn/dc = 0,08 cm$^3$/g benutzt. Für die Bestimmung der Sol-Anteile wurde über 0,2 µm, für die der Gel-Anteile über 5,0 µm vorfiltriert. Fehlende Anteile, d.h. im Falle einer Wiederfindungsrate < 100 % könnten entweder im Vorfilter zurückgehalten worden (= Gel-Körper > 5 µm) oder durch die Trennmembran entwichen sein (= niedermolekulare Bestandteile mit $M_w$ <5 kDa). Die erhaltenen Messwerte für %Sol bzw. %Gel wurden gemäß ihres Verhaltens bei der Probenpräparation entsprechend korrigiert und summieren sich auf 100 %. Die mittlere Molmasse $\dot{M}_w$ berechnet sich aus der Formel $\dot{M}_w = \%Sol \times M_wsol) + \%Gel \times M_w(gel)$.

Einstellungen / Trennmethode:

|  | Durchfluss | Querfluss | Fokus |
|---|---|---|---|
| Sol-Anteile | 0,7 mL/min | 3,0 konst. 5 min auf 0,1 mL/min in 20 min | 133 |
| Gel-Anteile | 0,7 mL/min | 3,0 konst. 3 min auf 0,1 mL/min in 15 min | 133 |

Synthese der Polyurethandispersionen

Allgemeines Verfahren PU-1, beispielhaft ausgeführt für PUD 1

In einem 3 l HWS Rührkessel mit Rückflusskühler wurden 800 g PPG-diol-1 und 64 g 2,2-Dimethylolpropionsäure auf 60° C erhitzt und bei 100 upm gerührt. Bei dieser Temperatur wurden 150 g Toluol-2,4-diisocyanat zugegeben und mit 100 g Aceton gespült. Die Mischung wurde 5 Stunden bei 98° C gerührt und das erhaltende Polyurethan (End-NCO-Gehalt < 0,25 %) anschließend mit 1 l Aceton unter starkem Rühren bei 200 upm verdünnt. Danach wurden 20 g Triethylamin als Neutralisationsmittel zugegeben und 5 Minuten lang bei 120 upm nachgerührt. Die Dispergierung erfolgte unter Rühren bei 120 upm durch Zugabe von 1,5 l VE-Wasser. Nach Zugabe von 1 g Afranil MG und 2 Tropfen Silikonentschäumer zum Ansatz wurde das Aceton im Vakuum bei 100 mbar destillativ entfernt (Außentemperatur 75° C, Innentemperatur bis 43° C), der Feststoffgehalt der erhaltenen Polyurethan-Dispersion bestimmt und der Ansatz mit VE-Wasser auf den gewünschten Feststoffgehalt eingestellt. Anschließend wurde die Polyurethandispersion zur Entfernung von möglichen Verunreinigungen über einen 400 $\mu$m Filter filtriert.
Es wurde eine Polyurethandispersion PUD 1 mit 40 % Feststoffgehalt, K-Wert = 37.4, LD-Wert = 74 und pH-Wert = 6,4 erhalten.

Die Herstellung der Polyurethandispersionen PUD 2 bis PUD 5 erfolgte in analoger Weise, dabei wurden Art und Mengen der Einsatzstoffe wie in Tabelle 1 aufgezeigt variiert.

Tabelle 1: Übersicht zu den nach Verfahren PU-1 hergestellten, PPG-basierten PU-Dispersionen (erfindungsgemäß).

|  | PUD-1 | PUD-2 | PUD-3 | PUD-4 | PUD-5 |
|---|---|---|---|---|---|
| PPG-diol-1 [g] | 800,0 | 800,0 | 800,0 | 800,0 | 800,0 |
| DMPA [g] | 64,0 | 80,3 | 64,0 | 80,3 | 74,5 |
| TDI [g] | 150,0 | 173,8 | 150,0 | 173,5 | - |
| HDI [g] | - | - | - | - | 160,7 |
| NEt$_3$ [g] | 20,0 | 60,6 | - | - | - |
| NaOH (50 %ig) [g] | - | - | 11,5 | - | - |
| NH$_3$ (23 %ig) [g] | - | - | - | 17,7 | 16,5 |
| FG | 40,0 | 20,0 | 51,2 | 40,0 | 46,3 |
| SZ [g KOH/kg] | 26,4 | 31,9 | 26,4 | 31,9 | 29,9 |
| NG | 40 % | 100 % | 30 % | 40 % | 40 % |
| K-Wert | 36,3 | - | 41,5 | 33,5 | 43,9 |
| Mn [kDa] | 22,0 | 23,8 | - | - | - |
| Mw [kDa] | 85,8 | 88,3 | - | - | - |
| Teilchengröße (DLS) [nm] | 174 | - | - | 386 | - |
| Teilchengröße (HDC) [nm] | 176 | 21 | - | - | - |

Allgemeines Verfahren PU-2 (Synthese von PUD 6 bis PUD 9, nicht erfindungsgemäß)

In einem Rührkessel mit Rückflusskühler wurden 365,2 g Polyol-Komponente, 30,9 g 2,2-Dimethylolpropionsäure, 0,9 g Ethanol und 44 g Aceton bei 60° C vorgelegt und unter Rühren mit einer Mischung aus 73,65 g Toluol-2,4-diisocyanat in 7,2 g Aceton versetzt. Der Reaktionsansatz wurde auf 90° C aufgeheizt und 7 Stunden auf dieser Temperatur gehalten. Nach Verdünnen mit weiteren 366 g Aceton und gleichzeitigem Abkühlen auf 50° C wurde das erhaltene Polyurethan durch Zugabe von 9,3 g Triethylamin neutralisiert und anschließend 5 Minuten lang nachgerührt. Die Dispergierung erfolgte unter Rühren durch Zugabe von 0,6 l VE-Wasser innerhalb von 15 Minuten. Nach Zugabe von 2 ml Afranil® MG wurde das Aceton im Vakuum bei 55° C destillativ entfernt.

Einzelheiten zu den so hergestellten Polyurethandispersionen PUD 6 bis PUD 9 finden sich in Tabelle 2.

Tabelle 2: Übersicht zu den nach Verfahren PU-2 hergestellten PU-Dispersionen (nicht erfindungsgemäß).

|  | PUD-6 | PUD-7 | PUD-8 | PUD-9 |
|---|---|---|---|---|
| Polyolkomponente | Polyesterol-1 | Polyesterol-2 | Polyesterol-3 | Polycarbonatdiol-1 |
| FG [%] | 49,7 | 42,9 | 41,3 | 44,3 |
| Teilchengröße (DLS) [nm] | 404 | 105 | 81 | 102 |
| pH-Wert | 6,3 | 6,4 | 6,2 | 6,4 |
| Mn [kDa] | 7,1 | 12,7 | 13,1 | 12,5 |
| Mw [kDa] | 24,2 | 44,1 | 47,6 | 43,6 |
| End-NCO [%] | 0,07 | 0,12 | 0,17 | 0,19 |

Synthese von PUD-10 (analog EP 334032, nicht erfindungsgemäß)

In einem Rührkessel mit Rückflusskühler wurden 214,6 g PPG-diol-1, 76,0 g Hydroxypivalinsäure, 161,0 g Polyisocyanat-1 und 23,8 g Aceton bei Raumtemperatur vorgelegt, danach wurde die Mischung unter Rühren auf 100° C aufgeheizt und für 6 Stunden bei dieser Temperatur gehalten. Nach Verdünnen mit 510,6 g Aceton und gleichzeitigem Abkühlen auf 50° C wurde das erhaltene Oligourethan (End-NCO = 0 %) durch Zugabe von 54,3 g Triethylamin innerhalb von 20 Minuten neutralisiert und 5 Minuten lang nachgerührt. Die Dispergierung erfolgte unter Rühren durch Zugabe von 760 ml VE-Wasser innerhalb von 25 Minuten. Nach Zugabe von 8 ml TEGO Foamex 831 (10 %ig in Aceton) wurde das Aceton im Vakuum destillativ entfernt. Es wurde eine Polyurethandispersion mit 40,1 % Feststoffgehalt, pH 6,7, $M_W$ = 14300 g/mol, $M_N$ = 3790 g/mol und einer mittleren Partikelgröße (DLS) von 40 nm erhalten.

Synthese von PUD-11 (analog Adler et al., Prog. Org. Coat. 2001, nicht erfindungsgemäß)

In einem Rührkessel mit Rückflusskühler wurden 261,8 g EP-PO-EO-Copolymer, 36,9 g 2,2-Dimethylolpropionsäure, 17,9 g Hydroxyethylmethacrylat und 12,1 g 1-Pentanol vorgelegt. Danach wurde die Mischung unter Rühren auf 50° C aufgeheizt und innerhalb von 20 Minuten mit 153,1 g Isophorondiisocyanat versetzt. Nach dem Nachspülen mit 13 g Aceton wurde die Reaktionsmischung auf 100° C aufgeheizt und für 6 Stunden bei dieser Temperatur gehalten. Nach Verdünnen mit 558 g Aceton und gleichzeitigem Abkühlen auf 50° C wurde das erhaltene Oligourethan (End-NCO = 0,07 %) durch Zugabe von 27,5 g Diethanolamin innerhalb von 5 Minuten neutralisiert und 15 Minuten lang nachgerührt. Die Dispergierung erfolgte unter Rühren durch Zugabe von 720 ml VE-Wasser innerhalb von 15 Minuten. Nach Zugabe von 10 ml TEGO Foamex® 831 (10 %ig in Aceton) wurde das Aceton im Vakuum destillativ entfernt. Es wurde eine Polyurethandispersion mit 36,7 % Feststoffgehalt, pH 7,4, $M_W$ = 9210 g/mol, $M_N$ = 3730 g/mol und einer mittleren Partikelgröße (DLS) von 30 nm erhalten.

Synthese von PUD-12 (nicht erfindungsgemäß)

In einem Rührkessel mit Rückflusskühler wurden 580 g PPG-diol-2, 72 g 1,4-Butandiol, 40 g 2,2-Dimethylolpropionsäure und 750 g Dipropylenglykoldimethylether (PROGLYDE™ DMM) vorgelegt und auf 60° C erhitzt. Unter Rühren bei 100 upm wurden 298 g Isophorondiisocyanat zugegeben und mit 60 g Dipropylenglykoldimethylether nachgespült. Die Mischung wurde 5 Stunden bei 98° C gerührt. Anschließend wurden zum erhaltenden Polyurethan (End-NCO = 0,443 %) unter starkem Rühren bei 200 upm 3 g Hydrazin als Kettenverlängerer und 6,8 g Triethylamin als Neutralisationsmittel zugegeben und 5 Minuten lang bei 120 upm nachgerührt. Die Dispergierung erfolgte unter Rühren bei 120 upm durch Zugabe von 1,38 l VE-Wasser. Es wurde eine Polyurethandispersion mit 42 % Feststoffgehalt erhalten, deren $M_W$ wegen Unlöslichkeit in THF nicht mittels GPC bestimmbar war. Mittels FFF-Analyse wurde ein Gel-Anteil von 35 % bestimmt, die mittlere Molmasse $\dot{M}_W$ betrug 54 MDa.

Synthese von PUD-13 (nicht erfindungsgemäß)

In einem Rührkessel mit Rückflusskühler wurden 211,1 g PPG-diol-1, 21,2 g 2,2-Dimethylolpropionsäure, 38,0 g 1,4-Butandiol und 52 g Aceton vorgelegt. Danach wurde die Mischung unter Rühren auf 65° C aufgeheizt, mit einer Mischung aus 182,7 g Isophorondiisocyanat und 10,3 g Aceton versetzt und die Mischung für 2,75 Stunden bei 80° C gehalten. Nach Verdünnen mit 366 g Aceton und gleichzeitigem Abkühlen auf 50° C wurde das erhaltene Polyurethan (End-NCO = 1,21 %) in einen Destillationsreaktor umgefüllt und bei 30° C mit 2,1 g Isophorondiamin als Kettenverlängerer versetzt. Anschließend wurden innerhalb von 6 Minuten 16,7 g Diethylethanolamin als Neutralisationsmittel zugetropft und 5 Minuten nachgerührt. Die Dispergierung erfolgte unter Rühren durch Zugabe von 760 ml VE-Wasser innerhalb von 19 Minuten. Direkt im Anschluss daran wurde innerhalb von 16 Minuten eine Lösung von 4,1 g Diethylentriamin als Vernetzer in 80,4 g Wasser zugetropft. Nach Zugabe von 1 ml TEGO Foamex® 831 wurde das Aceton im Vakuum destillativ entfernt. Es wurde eine Polyurethandispersion mit 34,0 % Feststoffgehalt, pH 7,6 und einer mittleren Partikelgröße (DLS) von 506 nm erhalten, deren $M_w$ wegen Unlöslichkeit in THF nicht mittels GPC bestimmbar war. Mittels FFF-Analyse wurde ein Gel-Anteil von 45 % bestimmt, die mittlere Molmasse $\dot{M}_w$ betrug 50 MDa.

Synthese der PU/PA-Hybriddispersionen

Die PU/PA-Hybriddispersionen wurden nach 3 verschiedenen Methoden hergestellt, wobei sich Methoden HD-M1 (beschrieben anhand von Hybriddispersion 6) und HD-M2 (beschrieben anhand von Hybriddispersion 20) lediglich in der Zugabe des Initiatorsystems unterscheiden und bei gleicher Monomerzusammensetzung nahezu identische anwendungstechnische Eigenschaften liefern. Die dritte Methode, HD-M3, hingegen unterscheidet sich von Methode HD-M1 und HD-M2 in der Zugabe der Monomere und liefert deutlich andere anwendungstechnische Eigenschaften. Alle Vergleichsbeispiele sind mit dem Zusatz "V" gekennzeichnet.

Allgemeines Verfahren HD-M1, beispielhaft ausgeführt für Hybriddispersion 6 ("Zulauf-Fahrweise")

Ein Gemisch aus 20 g Wasser, 0,13g einer 40 %igen Dissolvine® E-Fe-6 Lösung und 625 g der PUD-1 wurde unter einer Stickstoff-Atmosphäre auf 85° C erhitzt und 5 Minuten gerührt. Zu dieser Mischung wurden jeweils 10 % der Initiatorzuläufe 1 und 2 zugegeben und gerührt. Anschließend erfolgte die Dosierung des MonomerZulaufs, bestehend aus 141,25 g EHA und 108,75 g Styrol, innerhalb von 2,5 Stunden und 5 Minuten später innerhalb von 4 Stunden die Dosierung des Rests beider Initiatorzuläufe 1 und 2. Im Anschluss erfolgte die Zugabe von 10 g Wasser und eine Nachpolymerisation von 15 Minuten bei 85° C Temperatur, nach dem Abkühlen des Reaktionsansatzes wurde dieser filtriert.

Initiatorzulauf 1 (Reduktionsmittel):
3,2 g Rongalit© C und 111,25 g Wasser
Initiatorzulauf 2 (Oxidationsmittel):
37 g tBHP (10 %ige Lösung) und 70 g Wasser

In analoger Weise wurden weitere Hybriddispersionen synthetisiert, wobei die eingesetzte Polyurethandispersion, die Zusammensetzung des Monomerzulaufs sowie Initiatormenge und Art variiert wurden. Eine Übersicht über die relevanten Parameter sowie die Eigenschaften der entsprechenden Hybriddispersionen ist in den Tabellen 3 und 4 aufgeführt.

Tabelle 3.: Übersicht zu den gemäß Verfahren HD-M1 hergestellten PU/PA-Hybriddispersionen

| Hybriddispersion | PUD, Menge[1] | Monomere, Menge | Initiator 1, Menge[1] | Initiator 2, Menge[1] |
|---|---|---|---|---|
| 4 | PUD-1, 625 g | EA, 212,5 g nBA, 37,5 g | Rongalit© C, 3,2 g | tBHP (10 %ige Lösung), 37 g |
| 6 | PUD-1, 625 g | EHA, 141,25 g S, 108,75 g | Rongalit© C, 3,2 g | tBHP (10 %ige Lösung), 37 g |
| 8 | PUD-1, 625 g | MA, 125 g EA, 125 g | Rongalit© C, 3,2 g | tBHP (10 %ige Lösung), 37 g |
| 9 | PUD-1, 625 g | MA, 187,5 g EA, 62,5 g | Rongalit© C, 3,2 g | tBHP (10 %ige Lösung), 37 g |

(fortgesetzt)

| Hybriddispersion | PUD, Menge[1] | Monomere, Menge | Initiator 1, Menge[1] | Initiator 2, Menge[1] |
|---|---|---|---|---|
| 10 | PUD-1, 625 g | MA, 250 g | Rongalit© C, 3,2 g | tBHP (10 %ige Lösung), 37 g |
| 11 | PUD-4, 750 g | MA, 338 g GMA, 6,9 g | E316, 3,6 g | tBHP (10 %ige Lösung), 40,5 g |
| 12 | PUD 5, 605 g | MA, 274,4 g GMA, 5,6 g | Rongalit© C, 3,2 g | tBHP (10 %ige Lösung), 37 g |
| 13 | PUD-1, 625 g | MMA, 125 g EA, 125 g | Rongalit© C, 3,2 g | tBHP (10 %ige Lösung), 37 g |
| V14 | PUD-1, 625 g | MMA, 187,5 g EA, 62,5 g | Rongalit© C, 3,2 g | tBHP (10 %ige Lösung), 37 g |
| V15 | PUD-1, 625 g | MMA, 250 g | Rongalit© C, 3,2 g | tBHP (10 %ige Lösung), 37 g |
| 16 | PUD-1, 375 g | EA, 350 g | Rongalit© C, 3,2 g | tBHP (10 %ige Lösung), 37 g |
| 17 | PUD-1, 875 g | EA, 150 g | Rongalit© C, 3,2 g | tBHP (10 %ige Lösung), 37 g |
| 19 | PUD-3, 146 g | EA, 175 g | Rongalit© C, 1,6 g | tBHP (10 %ige Lösung), 18,5 g |
| 20 | PUD-3, 244 g | EA, 125 g | Rongalit© C, 1,6 g | tBHP (10 %ige Lösung), 18 g |
| 21 | PUD-3, 341 g | EA, 75 g | Rongalit© C, 1,6 g | tBHP (10 %ige Lösung), 18,5 g |
| 22 | PUD-4, 500 g | EA, 300g | Rongalit© C, 3,2 g | tBHP (10 %ige Lösung), 37 g |
| 23 | PUD-4, 625 g | MA, 250 g | Rongalit© C, 3,2 g | tBHP (10 %ige Lösung), 37 g |

[1] Die im Rezept HD-M1 angegebene Wassermenge in den Zuläufen und in der Vorlage wurde im entsprechenden Verhältnis geändert, sodass der in Tabelle 4 angegebene theoretische FG erreicht wurde. Der Monomerumsatz betrug bei allen Dispersionen > 99,9 %.

Tabelle 4.: Nassmusterwerte der PU/PA-Hybriddispersionen aus Tabelle 3.

| Hybriddispersion | theor. FG [%] | FG [%] | pH | LD [%] |
|---|---|---|---|---|
| 4 | 45 | 43,4 | 6,4 | 85 |
| 6 | 45 | 44,8 | 6,3 | 79 |
| 8 | 45 | 42,9 | 6,3 | 83 |
| 9 | 45 | 42,4 | 6,4 | 83 |
| 10 | 45 | 42,9 | 6,4 | 83 |
| 11 | 47 | 46,5 | 6,1 | 88 |
| 12 | 45 | 45,6 | 5,6 | 74 |
| 13 | 45 | 44,4 | 6,4 | 83 |
| V14 | 45 | 44,5 | 6,4 | 84 |

(fortgesetzt)

| Hybriddispersion | theor. FG [%] | FG [%] | pH | LD [%] |
|---|---|---|---|---|
| V15 | 45 | 44,4 | 6,5 | 84 |
| 16 | 43,1 | 42,4 | 6,1 | 82 |
| 17 | 43,1 | 43,6 | 6,4 | 86 |
| 19 | 45 | 44,3 | 6,4 | 77 |
| 20 | 45 | 44,7 | 6,3 | 82 |
| 21 | 45 | 44,9 | 6,5 | 84 |
| 22 | 50 | 51,9 | 6,0 | 87 |
| 23 | 50 | 49,4 | 6,2 | 86 |

Allgemeines Verfahren HD-M2, beispielhaft ausgeführt für Hybriddispersion 5 ("Zulauf-Fahrweise")

Ein Gemisch aus 100 g Wasser, 1,5 g einer 1 %igen Dissolvine® E-Fe-6 Lösung und 187,5 g der PUD-1 wurde unter einer Stickstoff-Atmosphäre unter Rühren bei 150 upm auf 85° C erhitzt. Danach wurden 9,0 g einer 10 %igen, wässrigen tBHP-Lösung zugegeben und 5 Minuten nachgerührt. Im Anschluss wurden innerhalb von 4 Stunden bei 85° C Reaktionstemperatur der Monomer-Zulauf, bestehend aus 75,0 g Ethylacrylat, sowie parallel dazu der Reduktionsmittel-Zulauf, bestehend aus einer Lösung von 0,63 g Rongalit® C in 20,37 g Wasser, zudosiert. Nach dem Ende der Zuläufe wurde bei 85° C für 15 Minuten nachpolymerisiert. Abschließend wurde zur weiteren Abreicherung der Monomere eine chemische Desodorierung durchgeführt, hierzu wurden innerhalb einer Stunde die Zuläufe 3 und 4 bei 85° C dosiert. Nach dem Abkühlen des Reaktionsansatzes wurde dieser filtriert. Es wurde eine PU/PA-Hybriddispersion mit 34,5 % Feststoffgehalt (theoretisch 35,1 %), einem pH-Wert von 6,4 und einer bimodalen Teilchengrößenverteilung (59 / 145 nm) erhalten.

Zulauf 3 (Reduktionsmittel): 0,32 g Rongalit® C und 10,44 g Wasser
Zulauf 4 (Oxidationsmittel): 2,06 g tBHP (10 %ige Lösung) und 18,0 g Wasser

In analoger Weise wurden weitere Hybriddispersionen synthetisiert, wobei die eingesetzte Polyurethandispersion oder die Zusammensetzung des Monomerzulaufs variiert wurden. Eine Übersicht über die relevanten Parameter sowie die Eigenschaften der entsprechenden Hybriddispersionen ist in Tabelle 5 aufgeführt.

Tabelle 5: Übersicht zu den gemäß Verfahren HD-M2 hergestellten PU/PA-Hybriddispersionen

| Hybriddispersion | PUD, Menge [1] | Monomere, Menge | FG [%] | pH | Partikelgröße (HDC) [nm] |
|---|---|---|---|---|---|
| 1 | PUD-1, 125 g | EHA, 42 g MMA, 4 g VAc, 4 g | 30,1 | 6,0 | 57 / 131 |
| 2 | PUD-1, 125 g | EHA, 42 g MMA, 8 g | 27,3 | 6,8 | 60 / 131 |
| 3 | PUD-1, 129 g | nBA, 22,5 g EHA, 15,0 g MMA, 7,5 g S, 5,0 g | 32,1 | 6,3 | 60 / 142 |
| 5 | PUD-1, 187,5 g | EA, 75 g | 34,5 | 6,4 | 59 / 145 |
| 7 | PUD-1, 147 g | nBA, 17,7 g EHA, 12,5 g MMA, 12,5 g S, 7,5 g | 32,4 | 6,4 | 60 / 142 |
| 18 | PUD-2, 375 g | EA, 75 g | 26,0 | 7,0 | 30 |
| V28 | PUD-6, 101 g | EHA, 42 g MMA, 8 g | 35,3 | 6,0 | 71 / 542 |

(fortgesetzt)

| Hybriddispersion | PUD, Menge [1] | Monomere, Menge | FG [%] | pH | Partikelgröße (HDC) [nm] |
|---|---|---|---|---|---|
| V29 | PUD-6, 101 g | EA, 50 g | 36,5 | 6,8 | 75 / 526 |
| V30 | PUD-7, 117 g | EHA, 42 g MMA, 8 g | 34,9 | 5,8 | 115 |
| V31 | PUD-7, 117 g | EA, 50 g | 37,4 | 6,0 | 115 |
| V32 | PUD-8, 121 g | EHA, 42 g MMA, 8 g | 34,3 | 5,9 | 84 |
| V33 | PUD-8, 121 g | EA, 50 g | 34,7 | 5,9 | 79 |
| V34 | PUD-9, 113 g | EHA, 42 g MMA, 8 g | 35,4 | 6,1 | 109 |
| V35 | PUD-9, 113 g | EA, 50 g | 36,2 | 6,2 | 109 |
| V36 | PUD-10, 249,4 g | EHA, 85 g MMA, 15 g | 34,1 | 6,9 | 56 |
| V37 | PUD-10, 249,4 g | EA, 100 g | 33,5 | 7,0 | 51 |
| V38 | PUD-11, 136,2 g | EHA, 42,5 g MMA, 7,5 g | 32,8 | 7,5 | 31/68 |
| V39 | PUD-11, 136,2 g | EA, 50 g | 34,5 | 6,5 | 560 |
| V40 | PUD-12, 137 g | EHA, 42,5 g MMA, 7,5 g | 31,6 | 7,5 | 3 |
| V41 | PUD-12, 137 g | EA, 50 g | 35,5 | 7,5 | 67 |
| V42 | PUD-13, 147,1 g | EHA, 42,5 g MMA, 7,5 g | 34,4 | 8,0 | nicht bestimmt |
| V43 | PUD-13, 147,1 g | EA, 50 g | 33,5 | 7,6 | nicht bestimmt |

[1] Falls ein anderer als der in Rezept HD-M2 beschriebene Feststoffgehalt erzielt wurde, so wurden die angegebenen Wassermengen in den Zuläufen und in der Vorlage entsprechend angepasst. Der Monomerumsatz betrug bei allen Dispersionen > 99,5 %.

Allgemeines Verfahren HD-M3, beispielhaft ausgeführt für Hybriddispersion V25 ("batch-Fahrweise", nicht erfindungsgemäß)

In einer 2 l-Planschliff-Apparatur wurden unter Stickstoff-Atmosphäre 97,75 g PUD-3 mit 37,5 g Ethylacrylat, 12,5 g n-Butylacrylat, 1,33 g tert-Butylperpivalat und 0,03 g einer 40 %igen Dissolvine® E-Fe-6 Lösung gemischt und der Reaktionsansatz anschließend mit 52,9 g Wasser aufgefüllt. Unter Rühren wurde die Mischung innerhalb einer Stunde auf 85° C erhitzt und dann unter stetigem Rühren für 3 Stunden bei dieser Temperatur gehalten, um die notwendige Abreicherung der Monomere zu garantieren. Nach dem Abkühlen des Reaktionsansatzes wurde dieser filtriert. Es wurde eine PU/PA-Hybriddispersion mit 43,7 % Feststoffgehalt (theoretisch 45 %), einem pH-Wert von 7,2 und einem LD-Wert von 80 % erhalten.

In analoger Weise wurden weitere Hybriddispersionen synthetisiert, wobei die eingesetzte Polyurethandispersion oder die Zusammensetzung des Monomerzulaufs variiert wurden. Eine Übersicht über die relevanten Parameter sowie die Eigenschaften der entsprechenden Hybriddispersionen ist in der nachfolgenden Tabelle aufgeführt.

Tabelle 6.: Übersicht zu den gemäß Verfahren HD-M3 hergestellten PU/PA-Hybriddispersionen

| Hybriddispersion | PUD, Menge [1] | Monomere, Menge | FG [%] | pH | LD [%] | Partikelgröße (HDC) [nm] |
|---|---|---|---|---|---|---|
| V24[2] | PUD-1, 125 g | EHA, 42,0 g MMA, 8,0 g EHTG, 0,4 g | 45,5 | 6,6 | - [3] | 70 |
| V25 | PUD-3, 97,75 g | EA, 37,5 g nBA, 12,5 g | 43,7 | 7,2 | 80 | - [3]. |
| V26 | PUD-1, 625 g | EHA, 141,25 g S, 108,75g g | 45,2 | 6,3 | 86 | 102 |
| V27 | PUD-3, 97,75 g | EA, 37,5 g MMA, 12,5 g | 39,1 | 7,1 | 80 | - [3] |

[1] Falls ein anderer als der in Rezept HD-M3 beschriebene Feststoffgehalt erzielt wurde, so wurden die angegebenen Wassermengen in den Zuläufen und in der Vorlage entsprechend angepasst. Der Monomerumsatz betrugt bei allen Dispersionen > 99,5 %.
[2] Abweichend von Rezept HD-M3 wurde auf den Zusatz von Dissolvine® E-Fe-6 verzichtet und ein alternatives Heizprogramm gewählt (in 2 h auf 95° C, dann für 1 h halten).
[3] Nicht bestimmt

Anwendungstechnische Prüfungen

Die Haftklebstoffe wurden mit einer Auftragsmenge von 60 g/m$^2$ auf PET-Folie Hostaphan® RN 36 als Träger beschichtet und 5 Minuten bei 90° C getrocknet. Der mit Haftklebstoff beschichtete Träger wurde in 25 mm breite Prüfstreifen geschnitten.

a) Schälfestigkeit (Adhäsion)

Zur Bestimmung der Schälfestigkeit wurden die 25 mm breiten Prüfstreifen auf die Prüffläche aus Stahl (AFERA-Stahl) bzw. Polyethylen geklebt und mit einer 1 kg schweren Rolle 1 mal angerollt. Der Prüfstreifen wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen, d.h. der Klebestreifen wurde umgebogen und parallel zum Prüfblech abgezogen und der dazu benötigte Kraftaufwand gemessen. Das Maß für die Schälfestigkeit ist die Kraft in N/25 mm, die sich als Durchschnittswert aus fünf Messungen ergibt. Die Schälfestigkeit wurde 24 Stunden nach der Verklebung bestimmt. Nach dieser Zeit hat sich die Klebekraft voll ausgebildet.

b) Scherfestigkeit (Kohäsion)

Zur Bestimmung der Scherfestigkeit wurden die Prüfstreifen mit einer verklebten Fläche von 12,5 x 12,5 mm auf Stahlblech (AFERA-Stahl) geklebt, mit einer 1 kg schweren Rolle 1 mal angerollt und anschließend hängend mit einem 1 kg Gewicht belastet. Die Scherfestigkeit (Kohäsion) wurde bei Normklima (23° C; 50 % rel. Luftfeuchtigkeit) und bei 70° C bestimmt. Das Maß für die Scherfestigkeit ist die Zeit in Stunden bis zum Abfallen des Gewichts; es wurde jeweils der Durchschnitt aus fünf Messungen berechnet.

c) S.A.F.T.-Test (Wärmestandfestigkeit)

Die Prüfstreifen wurden mit einer verklebten Fläche von 12,5 x 12,5 mm auf AFERA-Stahl geklebt, mit einer 2 kg schweren Rolle 4 mal angerollt und nach mindestens 16 Stunden Kontaktzeit hängend mit einem 1 kg Gewicht belastet. Während der Belastung wurde ausgehend von 23° C kontinuierlich mit einer Rate von 0,5° C / min aufgeheizt. Die beim Abfallen des Gewichtes erreichte Aufheiztemperatur ist ein Maß für die Wärmestandfestigkeit des Klebstoffs. Es wurde jeweils der Durchschnitt aus drei Messungen berechnet.

d) Quickstick (Soforthaftung)

Die Bestimmung des Quicksticks wurde in Anlehnung an die Bestimmung des Looptacks, beschrieben als FINAT Test Method no.9 (FTM 9) im Handbuch Nr. 6 der FINAT, durchgeführt: Ein 25 mm breiter und mindestens 175 mm langer Teststreifen wurde in Form einer Schlaufe an beiden Enden in die oberen Backen einer Zug-Dehnungs-Prüfapparatur eingespannt, wobei die Klebefläche nach außen zeigt. Anschließend wurde das untere Ende der Schlaufe in Kontakt mit einer PE-platte gebracht, die lotrecht zur Bewegungsrichtung der Zug-Dehnungs-Apparatur ausgerichtet ist. Dazu wurde die Schlaufe mit einer Geschwindigkeit von 300 mm/min solange auf die PE-platte abgesenkt, bis eine Kontaktfläche von 25x25 mm erreicht wird. Danach wurde sofort die Zugrichtung umgedreht und die Klebeverbindung mit einer Geschwindigkeit von 300 mm/min wieder getrennt. Das Maß für den Quickstick ist die Maximalkraft in N/25 mm, die während des Abziehens bis zur kompletten Trennung der Klebeverbindung aufgetreten ist. Es wurde jeweils der Durchschnittswert aus 5 Messungen berechnet.

Beurteilung des beobachteten Bruchbilds

F = klebfreier Film auf dem Substrat

A100 (A) = Klebeschicht bleibt vollständig auf der Basisfolie (Adhäsionsbruch)

A0 = Klebeschicht löst sich von der Basisfolie und geht auf das Substrat über (Umspulen)

K = Trennung in der Klebeschicht ohne Ablösung von einem der beiden Werkstoffe (Kohäsionsbruch)

K* = Trennung in der Klebeschicht ohne Ablösung von einem Werkstoff (Kohäsionsbruch), der Klebstoff hat keine Restklebrigkeit

MB = Teilweiser oder völliger Bruch einer Folie

Z = Zippy, Klebeschicht platzt ab (Rattergeräusch)

Tabelle 7: Anwendungstechnische Ergebnisse der Polyurethandispersionen PUD-1 bis PUD-13

| PUD | Quickstick[1] [N/25mm] (Bruchbild) | Schälfestigkeit[2] [N/25mm] (Bruchbild) | Scherfestigkeit[3] [h] (Bruchbild) | Scherfestigkeit[4] [h] (Bruchbild) | S.A.F.T.[5] [° C] |
|---|---|---|---|---|---|
| PUD-1 | 0,4 (A) | 33,6 (Z/F) | 00,5 (K) | 0,07 (K) | 53 |
| PUD-2 | 0,1 (A) | 21,8 (A) | 25,7 (K*) | 0,3 (K*) | 93 |
| PUD-3 | 0,6 (A) | 60,8 (K/Z) | 00,2 (K) | 0,05 (K) | 53 |
| PUD-4 | 0,6 (A) | 112,6 (MB) | 00,6 (K) | 0,07 (K) | 51 |
| PUD-5 | 0,7 (A) | 16,3 (K) | <0,02 (K) | <0,02 (K) | 34 |
| PUD-6 | 0,0 (A) | 00,1 (F) | <0,02 (F) | <0,02 (F) | 31 |
| PUD-7 | 0,2 (A) | 16,4 (A) | 09,1 (K*) | 0,08 (K*) | 65 |
| PUD-8 | 0,7 (A) | 38,9 (K/A0) | 00,6 (K) | 0,07 (K) | 52 |
| PUD-9 | 0,1 (A) | 03,4 (A) | >100 | 1,1 (K*) | 101 |
| PUD-10 | 6,7 (K) | 02,8 (K) | <0,02 (K) | <0,02 (K) | 30 |
| PUD-11 | 6,0 (Z) | 14,1 (K) | <0,02 (K) | <0,02 (K) | 31 |

(fortgesetzt)

| PUD | Quickstick[1] [N/25mm] (Bruchbild) | Schälfestigkeit[2] [N/25mm] (Bruchbild) | Scherfestigkeit[3] [h] (Bruchbild) | Scherfestigkeit[4] [h] (Bruchbild) | S.A.F.T.[5] [° C] |
|---|---|---|---|---|---|
| PUD-12 | <0,1 (A) | <0,1 (A) | _ [6] | _ [6] | _ [6] |
| PUD-13 | <0,1 (A) | <0,1/A | _ [6] | _ [6] | _ [6] |

[1] Quickstick auf Polyethylen
[2] Schälfestigkeit auf Stahl
[3] Scherfestigkeit Normklima (23° C; 50 % rel. Luftfeuchtigkeit)
[4] Scherfestigkeit bei 70° C
[5] Wärmestandfestigkeit S.A.F.T.
[6] keine Prüfung möglich, da nicht klebrig

Tabelle 8: Anwendungstechnische Ergebnisse verschiedener Hybriddispersionen (PPG-basierte PUD, PU/PA = 50: 50) mit variierendem Tg.

| Hybriddispersion | Fox-Tg [° C] | Quickstick[1] [N/25mm] (Bruchbild) | Schälfestigkeit[2] [N/25mm] (Bruchbild) | Scherfestigkeit[3] [h] (Bruchbild) | Scherfestigkeit[4] [h] (Bruchbild) | S.A.F.T.[5] [° C] |
|---|---|---|---|---|---|---|
| 1 | - 44 | 0,9 (A) | 11,4 (A) | 42,1 (F) | >100 | 162 |
| 2 | - 42 | 0,9 (A) | 11,0 (A) | >100 | >100 | 168 |
| 3 | - 24 | 1,3 (A) | 16,2 (A) | >100 | >100 | 150 |
| 4 | - 14 | 0,9 (A) | 15,6 (A) | 93,4 | 11,9 | 174 |
| 5 | - 8 | 1,5 (A) | 15,6 (A) | >100 | >100 | 170 |
| 6 | - 8 | 2,2 (A) | 24,8 (A) | >100 | 29,4 | 162 |
| 7 | - 6 | 1,5 (A) | 18,8 (A) | >100 | >100 | 152 |
| 8 | + 6 | 0,8 (A) | 18,7 (A) | 28,5 | 36,2 | 170 |
| 9 | + 14 | 1,0 (A) | 18,3 (A) | >100 | 79,7 | 172 |
| 10 | + 22 | 0,5 (A) | 20,5 (A) | >100 | | 171 |
| 11[a,b] | + 22 | 0,3 (A) | 23,23 (A) | >100 | >100 | >180 |
| 12[a] | + 22 | 0,7 (A) | 21,2 (A) | 25,4 (A) | >100 | >180 |
| 13 | + 39 | 0,2 (A) | 6,4 (A) | >100 | | 175 |
| V14 | + 69 | <0,1 (A) | <0,1 (A) | _ [6] | _ [6] | _ [6] |
| V15 | + 105 | <0,1 (A) | <0,1 (A) | _ [6] | _ [6] | _ [6] |

[a] PUD-Variante,
[b] Variante mit alternativem RedOx-Initiator
[1] Quickstick auf Polyethylen
[2] Schälfestigkeit auf Stahl
[3] Scherfestigkeit Normklima (23° C; 50 % rel. Luftfeuchtigkeit)
[4] Scherfestigkeit bei 70° C
[5] Wärmestandfestigkeit S.A.F.T.
[6] keine Prüfung möglich, da nicht klebrig

Tabelle 9: Anwendungstechnische Ergebnisse verschiedener Hybriddispersionen mit jeweils reinem Polyethylacrylat im Acrylanteil (Fox-Tg = -8 ° C); Variation von Verhältnis PU/PA, Säurezahl der PUD sowie Neutralisationsmittel und -grad.

| Hybriddispersion | PUD, Menge | Quickstick[1] [N/25mm] (Bruchbild) | Schälfestigkeit[2] [N/25mm] (Bruchbild) | Scherfestigkeit[3] [h] (Bruchbild) | Scherfestigkeit[4] [h] (Bruchbild) | S.A.F.T.[5] [° C] |
|---|---|---|---|---|---|---|
| 16 | PUD-1, 30 % | 1,6 (A) | 14,9 (A) | 5,9 | 0,5 | 172 |
| 5 | PUD-1, 50 % | 1,5 (A) | 15,6 (A) | >100 | >100 | 170 |
| 17 | PUD-1, 70 % | 0,7 (A) | 20,9 (A) | 42,2 | 14,7 | 162 |
| 18 | PUD-2, 50 % | 1,0 (A) | 19,0 (A) | >100 | 069 | 168 |
| 19 | PUD-3, 30 % | 1,4 (A) | 15,8 (A) | 10,9 | 100 | >180 |
| 20 | PUD-3, 50 % | 0,9 (A) | 22,8 (A) | 100 | 100 | >180 |
| 21 | PUD-3, 70 % | 0,7 (A) | 22,8 (A) | 34,9 | 1,1 | 176 |
| 22 | PUD-4, 40 % | 1,3 (A) | 17,6 (A) | 55,3 | 100 | 176 |
| 23 | PUD-4, 50 % | 0,1 (A) | 14,2 (A) | 73,5 | 28,8 | 143 |

Tabelle 10: Anwendungstechnische Ergebnisse verschiedener Hybriddispersionen in "Batch-Fahrweise" (PPG-basierte PUD, PU/PA = 50:50).

| Hybriddispersion | Fox-Tg [° C] | Quickstick[1] [N/ 25mm] (Bruchbild) | Schälfestigkeit[2] [N/25mm] (Bruchbild) | Scherfestigkeit[3] [h] (Bruchbild) | Scherfestigkeit[4] [h] (Bruchbild) | S.A.F.T.[5] [° C] |
|---|---|---|---|---|---|---|
| V24 | - 42 | 4,3 (A) | 42,9 (K) | 0,05 (K) | 0,02 (K) | 035 |
| V25 | - 18 | 0,7 (A) | 17,6 (A) | 1,9 (K) | 0,2 (K) | 115 |
| V26 | - 8 | 3,0 (A) | 22,0 (A) | 3,0 (K) | 0,1 (K) | 098 |
| V27 | + 13 | 0,6 (A) | 20,8 (A) | 7 (K) | 0,5 (K) | 127 |

[1] Quickstick auf Polyethylen
[2] Schälfestigkeit auf Stahl
[3] Scherfestigkeit Normklima (23° C; 50 % rel. Luftfeuchtigkeit)
[4] Scherfestigkeit bei 70° C
[5] Wärmestandfestigkeit S.A.F.T.
[6] keine Prüfung möglich, da nicht klebrig

Tabelle 11: Anwendungstechnische Ergebnisse verschiedener Hybriddispersionen (PU/PA = 50:50) unter Variation der Polyol-Komponente der PUD.

| Hybriddispersion | Fox-$T_g$ [°C] | Polyolkomponente | Quickstick[1] [N/25mm] (Bruchbild) | Schälfestig keit[2] [N/25mm] (Bruchbild) | Scherfesti gkeit[3] [h] (Bruchbild) | Scherfestig keit[4] [h] (Bruchbild) | S.A.F.T.[5] [°C] |
|---|---|---|---|---|---|---|---|
| 2 | - 42 | Polyether (PPG) | 0,9 (A) | 11,0 (A) | >100 | >100 | 168 |
| 5 | - 8 | | 1,5 (A) | 15,6 (A) | >100 | >100 | 170 |
| V28 | - 42 | aliphat. Polyester | 12,2 (A) | 11,4 (K) | 0,05 (K) | 0,01 (K) | 47 |
| V29 | - 8 | | 14,2 (Z) | 17,8 (K) | 0,03 (K) | 0,03 (K) | 36 |
| V30 | - 42 | aromat. Polyester | 1,3 (A) | 19 (A) | 1,1 (F) | 0,1 / (K*) | 80 |
| V31 | - 8 | | 0,9 (A) | 10,4 (A) | 4 (F) | 0,08 (K*) | 68 |
| V32 | - 42 | Polyester mit dim. FS | 1,7 (A) | 16 (A) | 5,2 (F) | 0,1 (K) | 86 |
| V33 | - 8 | | 1,6 (A) | 26,7 (A) | 2,2 (F) | 0,1 (K) | 71 |
| V34 | - 42 | aliphat. Polycarbonat | 0,2 (A) | 3,9 (A) | >100 | 0,08 (A) | 120 |
| V35 | - 8 | | 0,6 (A) | 7,4 (A) | 30,7 (F) | 0,3 (F) | 116 |

[1] Quickstick auf Polyethylen

[2] Schälfestigkeit auf Stahl

[3] Scherfestigkeit Normklima (23 ° C; 50 % rel. Luftfeuchtigkeit)

[4] Scherfestigkeit bei 70° C

[5] Wärmestandfestigkeit S.A.F.T.

[6] keine Prüfung möglich, da nicht klebrig

Tabelle 12: Anwendungstechnische Ergebnisse verschiedener Hybriddispersionen (PU/PA = 50:50) unter Variation der Molmasse der PUD

| Hybriddispersion | Fox-$T_g$ [°C] | Molmasse PUD | Quickstick[1] [N/25mm] (Bruchbild) | Schälfestigkeit[2] [N/25mm] (Bruchbild) | Scherfestigkeit[3] [h] (Bruchbild) | Scherfestig keit[4] [h] (Bruchbild) | S.A.F.T.[5] [° C] |
|---|---|---|---|---|---|---|---|
| 2 | - 42 | mittel | 0,9 (A) | 11,0 (A) | >100 | >100 | 168 |
| 5 | - 8 | | 1,5 (A) | 15,6 (A) | >100 | >100 | 170 |
| V36 | - 42 | niedrig | 26,0 (Z) | 12 (K) | <0,02 (K) | <0,02 (K) | 33 |
| V37 | - 8 | | 24,2 (Z) | 14,6 (K) | <0,02 (K) | <0,02 (K) | 33 |
| V38 | - 42 | niedrig | 01,2 (A) | 13,0 (A) | 1,2 (K) | 0,08 (K) | 84 |
| V39 | - 8 | | 1,1 (A) | 13,2 (A) | 2,4 (A0) | 0,1 (K) | 76 |
| V40 | - 42 | hoch / vernetzt | 0,2 (A) | 0,4 (F) | 0,1 (A) | 2,2 (A) | > 100 |
| V41 | - 8 | | 0,1 (A) | 2,8 (A) | 0,1 (A) | > 100 | > 100 |
| V42 | - 42 | hoch / vernetzt | <0,1 (A) | <0,1 (A) | | | |
| V43 | - 8 | | <0,1 (A) | <0,1 (A) | | | |

[1] Quickstick auf Polyethylen

[2] Schälfestigkeit auf Stahl

[3] Scherfestigkeit Normklima (23 ° C; 50 % rel. Luftfeuchtigkeit)

[4] Scherfestigkeit bei 70° C

[5] Wärmestandfestigkeit S.A.F.T.

[6] keine Prüfung möglich, da nicht klebrig

**Patentansprüche**

1. Verwendung einer wässrigen Dispersion zur Herstellung von Klebstoffen, wobei die wässrige Polymerdispersion durch ein Verfahren erhältlich ist, welches die folgenden Schritte umfasst:

   A) Bereitstellung einer wässrigen Dispersion wenigstens eines im Wesentlichen unvernetzten Polyurethans PU in Form von dispergierten Polyurethanpartikeln,
   wobei das Polyurethan PU erhältlich ist durch eine Polymerisation von Polyurethan-bildenden Verbindungen PU-M, enthaltend wenigstens ein Diol PU-M2, welches wenigstens eine Poly-$C_2$-$C_{14}$-alkylenethergruppe aufweist, welche wenigstens eine Einheit der Formel (i) aufweist

   $$\text{-O-CHR}^a\text{-CH}_2\text{-R}^b\text{-} \qquad \text{(i),}$$

   wobei

   $R^a$ für Wasserstoff oder $C_1$-$C_{12}$-Alkyl steht,
   $R^b$ für eine Bindung oder $C_1$-$C_3$-Alkylen steht,
   wobei $R^a$ nicht für Wasserstoff steht wenn $R^b$ eine Bindung ist, und wobei das PU im Wesentlichen keine ethylenisch ungesättigten Doppelbindungen aufweist und einen Gelanteil von < 20 % aufweist;

   B) radikalische Polymerisation einer Monomerzusammensetzung PA-M aus radikalisch polymerisierbaren, ethylenisch ungesättigten Verbindungen. umfassend als Hauptbestandteil wenigstens eine monomere ethylenisch ungesättigte Verbindung, die eine Wasserlöslichkeit von < 60 g/l bei 20 ° C und 1 bar aufweist, wobei die Monomerzusammensetzung eine theoretische Glasübergangstemperatur nach Fox von maximal 50 ° C aufweist, in der wässrigen Dispersion des wenigstens einen Polyurethans PU, wobei die Hauptmenge der Monomerzusammensetzung PA-M im Verlauf der Polymerisation zu der wässrigen Dispersion des wenigstens einen Polyurethans PU zugegeben wird.

2. Verwendung nach Anspruch 1, wobei das Polyurethan PU erhältlich ist durch eine Polymerisation von Polyurethan-bildenden Verbindungen PU-M, bestehend zu wenigstens 98 Gew.-% aus:

   a) wenigstens einer Isocyanat-Komponente PU-M1, umfassend:

      a1) wenigstens eine Diisocyanat-Verbindung PU-M1a und
      a2) gegebenenfalls wenigstens eine von PU-M1a verschiedene Isocyanat-Verbindung PU-Mlb, die mehr als 2 Isocyanatgruppen pro Molekül aufweist,

   b) wenigstens einer Di- oder Polyolkomponente, umfassend:

      b1) wenigstens ein Diol PU-M2, welches wenigstens eine Poly-$C_2$-$C_{14}$-alkylenethergruppe aufweist, welche wenigstens eine Einheit der Formel (i) aufweist

      $$\text{-O-CHR}^a\text{-CH}_2\text{-R}^b\text{-} \qquad \text{(i)}$$

      wobei
      $R^a$ für Wasserstoff oder $C_1$-$C_{12}$-Alkyl steht,
      $R^b$ für eine Bindung oder $C_1$-$C_3$-Alkylen steht,
      wobei $R^a$ nicht für Wasserstoff steht wenn $R^b$ eine Bindung ist, und
      b2) gegebenenfalls eine oder mehrere von PU-M2 verschiedene Diol- oder Polyol-komponenten PU-M3, welche ausgewählt sind unter

         - aliphatischen gesättigten oligomeren und polymeren Diol- und Polyol-verbindungen PU-M3a und
         - aliphatischen, cycloaliphatischen und aromatischen niedermolekularen Diolverbindungen PU-M3b mit einer Molmasse von weniger als 400 g/mol,

   c) gegebenenfalls wenigstens eine Komponente PU-M4, welche wenigstens eine polare Gruppe und wenigstens eine gegenüber Isocyanat reaktive Gruppe aufweist,
   d) gegebenenfalls einer oder mehreren, von den Komponenten a) bis c) verschiedener Komponente PU-M5, welche wenigstens eine gegenüber Isocyanat reaktive Gruppe aufweist.

3. Verwendung nach Anspruch 2,
   wobei die Polyurethan-bildenden Verbindungen PU-M umfassen:

   a) 5 bis 40 Gew.-%, bevorzugt 10 bis 25 Gew.-% wenigstens einer Isocyanat-Komponente PU-M1, bezogen auf die Gesamtmasse der Verbindungen PU-M,
   b1) 45 bis 100 Gew.-%, bevorzugt 70 bis 99,5 Gew.-% bezogen auf die Gesamtmasse der Verbindungen PU-M2, PU-M3, PU-M4 und PU-M5, wenigstens einer Diolkomponente PU-M2,
   b2) 0 bis 20 Gew.-%, bevorzugt 0 bis 15 Gew.-% bezogen auf die Gesamtmasse der Verbindungen PU-M2, PU-M3, PU-M4 und PU-M5, wenigstens einer Diol- oder Polyol-komponente PU-M3,
   c) 0 bis 15 Gew.-%, bevorzugt 0,5 bis 10 Gew.-% bezogen auf die Gesamtmasse der Verbindungen PU-M2, PU-M3, PU-M4, PU-M5, wenigstens einer Komponente PU-M4,
   d) 0 bis 10 Gew.-%, bevorzugt 0 bis 5 Gew.-% bezogen auf die Summe der Verbindungen PU-M2, PU-M3, PU-M4, PU-M5, von den Komponenten a) bis c) verschiedener Verbindungen PU-M5.

4. Verwendung nach einem der vorherigen Ansprüche, wobei die Isocyanat-Komponente PU-M1 als Hauptbestandteil wenigstens eine Diisocyanat-Verbindung PU-M1a enthält, die ausgewählt ist unter Diisocyanatverbindungen mit 4 bis 60 C-Atomen.

5. Verwendung nach einem der vorherigen Ansprüche, wobei das Diol PU-M2 wenigstens eine Poly-$C_2$-$C_{14}$-alkylen-ethergruppe aufweist, welche wenigstens eine Einheit der Formel (i) aufweist

   $$-O-CHR^a-CH_2-R^b- \qquad (i)$$

   wobei

   $R^a$ für $C_1$-$C_{12}$-Alkyl steht,
   $R^b$ für eine Bindung oder $C_1$-$C_3$-Alkylen steht.

6. Verwendung nach einem der vorherigen Ansprüche, wobei die Verbindungen PU-M3a ausgewählt sind unter von PU-M2 verschiedenen aliphatischen Polyetherdiolen, Polyetherpolyolen, Polyesterdiolen, Polyesterpolyolen, Polycarbonatdiolen und Polycarbonatpolyolen oder wobei die Verbindungen PU-M3b ausgewählt sind unter unverzweigten und verzweigten $C_2$-$C_{10}$-Alkandiolen und $C_2$-$C_{10}$-Alkendiolen.

7. Verwendung nach einem der vorherigen Ansprüche,
   wobei die Verbindungen PU-M4 ausgewählt sind unter Verbindungen, welche eine oder mehrere NCO-reaktive Gruppen aufweisen, welche unter Hydroxy, Thiol, primärem Amin und sekundärem Amin ausgewählt sind und wenigstens eine polare Gruppe aufweisen, welche ausgewählt ist unter den Salzen von Carbonsäuren, Sulfonsäuren, Schwefelsäure, Schwefelsäurehalbestern, Phosphorsäuren, Phosphorsäurehalbestern und Phosphonsäuren oder Polyethylenoxid und Polyethylenoxid-Copolymere, vorzugsweise einfach endgruppenverschlossen.

8. Verwendung nach einem der vorherigen Ansprüche, wobei das Polyurethan PU
   wobei das Polyurethan PU wenigstes eines der folgenden Merkmale aufweist:

   - das Polyurethan PU weist weniger als 0,1 mol/kg ethylenisch ungesättigte Bindungen auf,
   - das Polyurethan weist eine gewichtsmittlere Molmasse $M_W$ im Bereich von 10000 bis 500000 g/mol auf, -
   - das Polyurethan PU ist im Wesentlichen gelfrei,
   - das Polyurethan PU weist einen Vernetzungsgrad von weniger als 1 % auf.

9. Verwendung nach einem der vorherigen Ansprüche, wobei das Polyurethan PU weniger als 2 Gew.-%, bezogen auf das Gesamtgewicht des Polyurethans, Harnstoffgruppen aufweist.

10. Verwendung nach einem der vorherigen Ansprüche, wobei die Monomerzusammensetzung PA-M wenigstens 30 Gew.-%, vorzugsweise wenigstens 50% bezogen auf das Gesamtgewicht von PA-M, wenigstens ein Monomer PA-M1 enthält, welches ausgewählt ist unter $C_1$-$C_{20}$-Alkylestern der Acrylsäure, $C_1$-$C_{20}$-Alkylestern der Methacrylsäure und Mischungen davon oder wobei die Monomerzusammensetzung PA-M die folgenden Komponenten enthält:

a) 30 bis 100 Gew.%, vorzugsweise 50 bis 100 Gew.% bezogen auf die Gesamtmasse der Monomerzusammensetzung PA-M, wenigstens ein Monomer PA-M1;

b) 0 bis 70 Gew.%, vorzugsweise 0 bis 50 Gew.% bezogen auf die Gesamtmasse der Monomerzusammensetzung PA-M, wenigstens ein Monomer PA-M2, das ausgewählt ist unter vinylaromatischen Verbindungen, Vinylester von gesättigten, verzweigten und unverzweigten $C_1$-$C_{12}$-Carbonsäuren und zweifach ungesättigten, verzweigten und unverzweigten $C_4$-$C_8$-Alkenen.

11. Verwendung nach einem der vorherigen Ansprüche, wobei die wässrige Polymerdispersion wenigstens eines der folgenden Merkmale aufweist:

- die theoretische Glastemperatur des Polymers, welches aus der Monomerzusammensetzung PA-M aufgebaut ist, beträgt höchstens 50 ° C und liegt insbesondere im Bereich von -50 bis +30 ° C
- das Gewichtsverhältnis des Polyurethans PU zu den polymerisierten Monomeren PA-M liegt im Bereich von 5:95 zu 95:5, insbesondere im Bereich vom 30:70 bis 70:30
- die Polymerpartikel weisen eine mittlere Teilchengröße, z-Mittelwert gemessen mittels dynamischer Lichtstreuung, von 0,01 bis 2,0 μm, bevorzugt von 0,02 bis 0,4 μm, auf.

12. Verwendung nach einem der vorherigen Ansprüche, wobei die Umsetzung in Schritt B) so erfolgt, dass

B1) man zunächst einen Teil des Polymerisationsinitiators und einen Teil der Monomerzusammensetzung PA-M zur wässrigen Dispersion des Polyurethans PU gibt und die Polymerisation initiiert,
B2) nach wenigstens teilweiser Polymerisation der in der Dispersion enthaltenen Monomere der Monomerzusammensetzung PA-M weitere Monozusammensetzung PA-M zugegeben wird.

13. Verwendung nach Anspruch 12, wobei die Zugabe in Schritt B2) kontinuierlich erfolgt.

14. Verwendung nach einem der vorherigen Ansprüche, wobei die Polymerisation der Monomerzusammensetzung PA-M in Gegenwart eines Polymerisationsinitiators durchgeführt wird, welcher wenigstens ein Übergangsmetall umfasst.

15. Verwendung einer Dispersion nach einem der Ansprüche 1 bis 14 als Haftklebstoff zur Herstellung von Klebeetiketten, Klebebändern, Pflastern, Bandagen und selbstklebenden Folien.

16. Haftklebstoffartikel, wobei mindestens ein Teil einer Substratoberfläche unter Verwendung einer Dispersion nach einem der Ansprüche 1 bis 14 beschichtet ist.

**Claims**

1. The use of an aqueous dispersion for producing adhesives, where the aqueous polymer dispersion is obtainable by a process which comprises the following steps:

A) provision of an aqueous dispersion of at least one essentially uncrosslinked polyurethane PU in the form of dispersed polyurethane particles, where the polyurethane PU is obtainable by a polymerization of polyurethane-forming compounds PU-M, comprising at least one diol PU-M2, which has at least one poly-$C_2$-$C_{14}$-alkylene ether group which has at least one unit of the formula (i)

$$-O-CHR^a-CH_2-R^b-  \qquad (i)$$

where

$R^a$ is hydrogen or $C_1$-$C_{12}$-alkyl,
$R^b$ is a bond or $C_1$-$C_3$-alkylene,
where $R^a$ is not hydrogen if $R^b$ is a bond, and where the PU has essentially no ethylenically unsaturated double bonds and has a gel fraction of < 20%;

B) radical polymerization of a monomer composition PA-M from radically polymerizable, ethylenically unsaturated compounds, comprising, as main constituent, at least one monomeric ethylenically unsaturated compound which has a solubility in water of < 60 g/l at 20°C and 1 bar, where the monomer composition has a theoretical glass transition temperature according to Fox of at most 50°C, in the aqueous dispersion of the at least one polyurethane PU, where the majority of the monomer composition PA-M is added in the course of the polymerization to the aqueous dispersion of the at least one polyurethane PU.

2. The use according to claim 1, where the polyurethane PU is obtainable by a polymerization of polyurethane-forming compounds PU-M, consisting to at least 98% by weight of:

   a) at least one isocyanate component PU-M1, comprising:

   a1) at least one diisocyanate compound PU-M1a and
   a2) optionally at least one isocyanate compound PU-M1b, different from PU-M1a, which has more than 2 isocyanate groups per molecule,

   b) at least one di- or polyol component, comprising:

   b1) at least one diol PU-M2 which has at least one poly-$C_2$-$C_{14}$-alkylene ether group which has at least one unit of the formula (i)

   $$-O-CHR^a-CH_2-R^b- \qquad (i)$$

   where

   $R^a$ is hydrogen or $C_1$-$C_{12}$-alkyl,
   $R^b$ is a bond or $C_1$-$C_3$-alkylene,
   where $R^a$ is not hydrogen if $R^b$ is a bond, and

   b2) optionally one or more diol or polyol components PU-M3, different from PU-M2, which are selected from

   - aliphatic saturated oligomeric and polymeric diol and polyol compounds PU-M3a and
   - aliphatic, cycloaliphatic and aromatic low molecular weight diol compounds PU-M3b with a molar mass of less than 400 g/mol,

   c) optionally at least one component PU-M4 which has at least one polar group and at least one group that is reactive towards isocyanate,
   d) optionally one or more component PU-M5, different from the components a) to c), which has at least one group that is reactive towards isocyanate.

3. The use according to claim 2, where the polyurethane-forming compounds PU-M comprise:

   a) 5 to 40% by weight, preferably 10 to 25% by weight, of at least one isocyanate component PU-M1, based on the total mass of the compounds PU-M,
   b1) 45 to 100% by weight, preferably 70 to 99.5% by weight, based on the total mass of the compounds PU-M2, PU-M3, PU-M4 and PU-M5, of at least one diol component PU-M2,
   b2) 0 to 20% by weight, preferably 0 to 15% by weight, based on the total mass of the compounds PU-M2, PU-M3, PU-M4 and PU-M5, of at least one diol or polyol component PU-M3,
   c) 0 to 15% by weight, preferably 0.5 to 10% by weight, based on the total mass of the compounds PU-M2, PU-M3, PU-M4, PU-M5, of at least one component PU-M4,
   d) 0 to 10% by weight, preferably 0 to 5% by weight, based on the sum of the compounds PU-M2, PU-M3, PU-M4, PU-M5, of compounds PU-M5 different from the components a) to c).

4. The use according to any one of the preceding claims, where the isocyanate component PU-M1 comprises, as main constituent, at least one diisocyanate compound PU-M1a which is selected from diisocyanate compounds having 4 to 60 carbon atoms.

5. The use according to any one of the preceding claims, where the diol PU-M2 has at least one poly-$C_2$-$C_{14}$-alkylene ether group which has at least one unit of the formula (i)

$$-O-CHR^a-CH_2-R^b- \qquad (i)$$

where

$R^a$ is $C_1$-$C_{12}$-alkyl,
$R^b$ is a bond or $C_1$-$C_3$-alkylene.

6. The use according to any one of the preceding claims, where the compounds PU-M3a are selected from aliphatic polyether diols, polyether polyols, polyester diols, polyester polyols, polycarbonate diols and polycarbonate polyols different from PU-M2 or where the compounds PU-M3b are selected from unbranched and branched $C_2$-$C_{10}$-alkanediols and $C_2$-$C_{10}$-alkenediols.

7. The use according to any one of the preceding claims, where the compounds PU-M4 are selected from compounds which have one or more NCO-reactive groups, which are selected from hydroxy, thiol, primary amine and secondary amine and have at least one polar group which is selected from the salts of carboxylic acids, sulfonic acids, sulfuric acid, sulfuric acid half-esters, phosphoric acids, phosphoric acid half-esters and phosphonic acids or polyethylene oxide and polyethylene oxide copolymers, preferably terminally capped at one end.

8. The use according to any one of the preceding claims, where the polyurethane PU has at least one of the following features:

   - the polyurethane PU has less than 0.1 mol/kg of ethylenically unsaturated bonds,
   - the polyurethane has a weight-average molar mass $M_w$ in the range from 10 000 to 500 000 g/mol,
   - the polyurethane PU is essentially gel-free,
   - the polyurethane PU has a degree of crosslinking of less than 1%.

9. The use according to any one of the preceding claims, where the polyurethane PU has less than 2% by weight, based on the total weight of the polyurethane, of urea groups.

10. The use according to any one of the preceding claims, where the monomer composition PA-M comprises at least 30% by weight, preferably at least 50%, based on the total weight of PA-M, of at least one monomer PA-M1 which is selected from $C_1$-$C_{20}$-alkyl esters of acrylic acid, $C_1$-$C_{20}$-alkyl esters of methacrylic acid and mixtures thereof or where the monomer composition PA-M comprises the following components:

    a) 30 to 100% by weight, preferably 50 to 100% by weight, based on the total mass of the monomer composition PA-M, of at least one monomer PA-M1;
    b) 0 to 70% by weight, preferably 0 to 50% by weight, based on the total mass of the monomer composition PA-M, of at least one monomer PA-M2, which is selected from vinylaromatic compounds, vinyl esters of saturated, branched and unbranched $C_1$-$C_{12}$-carboxylic acids and diunsaturated, branched and unbranched $C_4$-$C_8$-alkenes.

11. The use according to any one of the preceding claims, where the aqueous polymer dispersion has at least one of the following features:

    - the theoretical glass transition temperature of the polymer which is composed of the monomer composition PA-M is at most 50°C and is in particular in the range from -50 to +30°C,
    - the weight ratio of the polyurethane PU to the polymerized monomers PA-M is in the range from 5:95 to 95:5, in particular in the range from 30:70 to 70:30,
    - the polymer particles have an average particle size, Z average measured by means of dynamic light scattering, of from 0.01 to 2.0 $\mu$m, preferably from 0.02 to 0.4 $\mu$m.

12. The use according to any one of the preceding claims, where the reaction in step B) takes place in such a way that

    B1) firstly some of the polymerization initiator and some of the monomer composition PA-M is added to the aqueous dispersion of the polyurethane PU and the polymerization is initiated,
    B2) after at least partial polymerization of the monomers of the monomer composition PA-M present in the dispersion, further monomer composition PA-M is added.

13. The use according to claim 12, where the addition in step B2) takes place continuously.

**14.** The use according to any one of the preceding claims where the polymerization of the monomer composition PA-M is carried out in the presence of a polymerization initiator which comprises at least one transition metal.

**15.** The use of a dispersion according to any one of claims 1 to 14 as pressure-sensitive adhesive for producing sticky labels, sticky tapes, plasters, bandages and self-adhesive films.

**16.** A pressure-sensitive adhesive article, where at least some of a substrate surface is coated using a dispersion according to any one of claims 1 to 14.

**Revendications**

**1.** Utilisation d'une dispersion aqueuse pour la fabrication d'adhésifs, dans laquelle la dispersion aqueuse de polymère peut être obtenue par un procédé, qui comprend les étapes suivantes :

A) la préparation d'une dispersion aqueuse d'au moins un polyuréthane PU essentiellement non réticulé sous la forme de particules de polyuréthane dispersées,

le polyuréthane PU pouvant être obtenu par une polymérisation de composés formant un polyuréthane PU-M, contenant :
au moins un diol PU-M2, qui comprend au moins un groupe éther de polyalkylène en $C_2$-$C_{14}$, qui comprend au moins une unité de la formule (i) :

$$-O-CHR^a-CH_2-R^b-  \qquad (i),$$

dans laquelle

$R^a$ représente hydrogène ou alkyle en $C_1$-$C_{12}$,
$R^b$ représente une liaison ou alkylène en $C_1$-$C_3$,
$R^a$ ne représentant pas hydrogène lorsque $R^b$ est une liaison,

et le PU ne comprenant essentiellement pas de doubles liaisons éthyléniquement insaturées et présentant une proportion de gel < 20 % ;

B) la polymérisation radicalaire d'une composition de monomères PA-M de composés éthyléniquement insaturés polymérisables par voie radicalaire, comprenant en tant que constituant principal au moins un composé éthyléniquement insaturé monomère qui présente une solubilité dans l'eau < 60 g/l à 20 °C et 1 bar, la composition de monomères présentant une température de transition vitreuse théorique selon Fox d'au plus 50 °C, dans la dispersion aqueuse dudit au moins un polyuréthane PU, la quantité principale de la composition de monomères PA-M étant ajoutée au cours de la polymérisation à la dispersion aqueuse dudit au moins un polyuréthane PU.

**2.** Utilisation selon la revendication 1, dans laquelle le polyuréthane PU peut être obtenu par une polymérisation de composés formant un polyuréthane PU-M, constitués à hauteur d'au moins 98 % en poids par :

a) au moins un composant isocyanate PU-M1, comprenant :

a1) au moins un composé diisocyanate PU-M1a et
a2) éventuellement au moins un composé isocyanate PU-M1b différent de PU-MIa, qui comprend plus de 2 groupes isocyanate par molécule,

b) au moins un composant di- ou polyol, comprenant :

b1) au moins un diol PU-M2, qui comprend au moins un groupe éther de polyalkylène en $C_2$-$C_{14}$, qui comprend au moins une unité de la formule (i) :

$$-O-CHR^a-CH_2-R^b-  \qquad (i)$$

dans laquelle

**37**

$R^a$ représente hydrogène ou alkyle en $C_1$-$C_{12}$,
$R^b$ représente une liaison ou alkylène en $C_1$-$C_3$,
$R^a$ ne représentant pas hydrogène lorsque $R^b$ est une liaison, et

b2) éventuellement un ou plusieurs composants diol ou polyol PU-M3 différents de PU-M2, qui sont choisis parmi :

- les composés diol et polyol oligomères et polymères aliphatiquement saturés PU-M3a et
- les composés diol de faible poids moléculaire aliphatiques, cycloaliphatiques et aromatiques PU-M3b ayant une masse molaire inférieure à 400 g/mol,

c) éventuellement au moins un composant PU-M4, qui comprend au moins un groupe polaire et au moins un groupe réactif avec les isocyanates,
d) éventuellement un ou plusieurs composants PU-M5 différents des composants a) à c), qui comprennent au moins un groupe réactif avec les isocyanates.

3. Utilisation selon la revendication 2, dans laquelle les composés formant un polyuréthane PU-M comprennent :

a) 5 à 40 % en poids, de préférence 10 à 25 % en poids, d'au moins un composant isocyanate PU-M1, par rapport à la masse totale des composés PU-M,
b1) 45 à 100 % en poids, de préférence 70 à 99,5 % en poids, par rapport à la masse totale des composés PU-M2, PU-M3, PU-M4 et PU-M5, d'au moins un composant diol PU-M2,
b2) 0 à 20 % en poids, de préférence 0 à 15 % en poids, par rapport à la masse totale des composés PU-M2, PU-M3, PU-M4 et PU-M5, d'au moins un composant diol ou polyol PU-M3,
c) 0 à 15 % en poids, de préférence 0,5 à 10 % en poids, par rapport à la masse totale des composés PU-M2, PU-M3, PU-M4, PU-M5, d'au moins un composant PU-M4,
d) 0 à 10 % en poids, de préférence 0 à 5 % en poids, par rapport à la masse totale des composés PU-M2, PU-M3, PU-M4, PU-M5, de composés PU-M5 différents des composants a) à c).

4. Utilisation selon l'une quelconque des revendications précédentes, dans laquelle le composant isocyanate PU-M1 contient en tant que constituant principal au moins un composé diisocyanate PU-Mla, qui est choisi parmi les composés diisocyanate contenant 4 à 60 atomes C.

5. Utilisation selon l'une quelconque des revendications précédentes, dans laquelle le diol PU-M2 comprend au moins un groupe éther de polyalkylène en $C_2$-$C_{14}$, qui comprend au moins une unité de la formule (i) :

$$-O-CHR^a-CH_2-R^b-  \qquad (i)$$

dans laquelle

$R^a$ représente alkyle en $C_1$-$C_{12}$,
$R^b$ représente une liaison ou alkylène en $C_1$-$C_3$.

6. Utilisation selon l'une quelconque des revendications précédentes, dans laquelle les composés PU-M3a sont choisis parmi les polyéther-diols aliphatiques différents de PU-M2, les polyéther-polyols, les polyester-diols, les polyester-polyols, les polycarbonate-diols et les polycarbonate-polyols, ou dans laquelle les composés PU-M3b sont choisis parmi les alcane-diols en $C_2$-$C_{10}$ et les alcènes-diols en $C_2$-$C_{10}$ non ramifiés et ramifiés.

7. Utilisation selon l'une quelconque des revendications précédentes, dans laquelle les composés PU-M4 sont choisis parmi les composés qui comprennent un ou plusieurs groupes réactifs avec NCO, qui sont choisis parmi hydroxy, thiol, amine primaire et amine secondaire, et comprennent au moins un groupe polaire, qui est choisi parmi les sels d'acides carboxyliques, d'acides sulfoniques, d'acide sulfurique, de semi-esters d'acide sulfurique, d'acides phosphoriques, de semi-esters d'acides phosphoriques et d'acides phosphoniques ou d'oxyde de polyéthylène et de copolymères d'oxyde de polyéthylène, de préférence fermés une fois par des groupes terminaux.

8. Utilisation selon l'une quelconque des revendications précédentes, dans laquelle le polyuréthane PU présente au moins une des caractéristiques suivantes :

- le polyuréthane PU comprend moins de 0,1 mol/kg de liaisons éthyléniquement insaturées,
- le polyuréthane présente une masse molaire moyenne en poids $M_w$ dans la plage allant de 10 000 à 500 000 g/mol,
- le polyuréthane PU est essentiellement exempt de gel,
- le polyuréthane PU présente un degré de réticulation inférieur à 1 %.

9. Utilisation selon l'une quelconque des revendications précédentes, dans laquelle le polyuréthane PU comprend moins de 2 % en poids, par rapport au poids total du polyuréthane, de groupes urée.

10. Utilisation selon l'une quelconque des revendications précédentes, dans laquelle la composition de monomères PA-M contient au moins 30 % en poids, de préférence au moins 50 %, par rapport au poids total de PA-M, d'au moins un monomère PA-M1, qui est choisi parmi les esters alkyliques en $C_1$-$C_{20}$ de l'acide acrylique, les esters alkyliques en $C_1$-$C_{20}$ de l'acide méthacrylique et leurs mélanges, ou dans laquelle la composition de monomères PA-M contient les composants suivants :

   a) 30 à 100 % en poids, de préférence 50 à 100 % en poids, par rapport à la masse totale de la composition de monomères PA-M, d'au moins un monomère PA-M1 ;
   b) 0 à 70 % en poids, de préférence 0 à 50 % en poids par rapport à la masse totale de la composition de monomères PA-M, d'au moins un monomère PA-M2, qui est choisi parmi les composés aromatiques de vinyle, les esters vinyliques d'acides carboxyliques en $C_1$-$C_{12}$ saturés, ramifiés et non ramifiés, et les alcènes en $C_4$-$C_8$ bi-insaturés, ramifiés et non ramifiés.

11. Utilisation selon l'une quelconque des revendications précédentes, dans laquelle la dispersion aqueuse de polymère présente au moins une des caractéristiques suivantes :

   - la température de transition vitreuse théorique du polymère qui est formé à partir de la composition de monomères PA-M est d'au plus 50 °C et se situe notamment dans la plage allant de -50 à +30 °C,
   - le rapport en poids entre le polyuréthane PU et les monomères polymérisés PA-M se situe dans la plage allant de 5:95 à 95:5, notamment dans la plage allant de 30:70 à 70:30,
   - les particules polymères présentent une taille de particule moyenne, valeur moyenne z mesurée par diffusion dynamique de la lumière, de 0,01 à 2,0 $\mu$m, de préférence de 0,02 à 0,4 $\mu$m.

12. Utilisation selon l'une quelconque des revendications précédentes, dans laquelle la réaction à l'étape B) a lieu de telle sorte que

   B1) tout d'abord une partie de l'initiateur de polymérisation et une partie de la composition de monomères PA-M sont ajoutées à la dispersion aqueuse du polyuréthane PU et la polymérisation est initiée,
   B2) après une polymérisation au moins partielle des monomères de la composition de monomères PA-M contenus dans la dispersion, davantage de composition de monomères PA-M est ajoutée.

13. Utilisation selon la revendication 12, dans laquelle l'ajout à l'étape B2) a lieu en continu.

14. Utilisation selon l'une quelconque des revendications précédentes, dans laquelle la polymérisation de la composition de monomères PA-M est réalisée en présence d'un initiateur de polymérisation, qui comprend au moins un métal de transition.

15. Utilisation d'une dispersion selon l'une quelconque des revendications 1 à 14 en tant qu'adhésif sensible à la pression pour la fabrication d'étiquettes adhésives, de bandes adhésives, de pansements, de bandages et de films autocollants.

16. Article adhésif sensible à la pression, dans lequel au moins une partie d'une surface de substrat est revêtue en utilisant une dispersion selon l'une quelconque des revendications 1 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008049932 A
- US 3705164 A
- EP 0841357 A
- US 4918129 A
- WO 2012084668 A
- EP 2316867 A1
- WO 04029121 A1
- DE 1248943
- DE 19621027 A

**In der Beschreibung aufgeführte Nicht-Patentliteratur**

- **W. MÄCHTLE ; G. LEY ; J. STREIB.** *Prog. Coll. Pol. Sci.,* 2007, vol. 99, 144-153
- Ullmanns Encyklopädie der technischen Chemie. vol. 19, 62-65
- Katalysatoren. Polyurethane. Carl Hanser Verlag, 1993, 104-110
- **BLANK et al.** *Progress in Organic Coatings,* 1999, vol. 35, 19-29
- Houben-Weyl, Methoden der organischen Chemie. 1961, vol. XIVII, 297 ff